(19) Europäisches Patentamt / European Patent Office / Office européen des brevets

(11) **EP 1 884 869 B1**

(12) **EUROPEAN PATENT SPECIFICATION**

(45) Date of publication and mention
of the grant of the patent:
**29.11.2017 Bulletin 2017/48**

(51) Int Cl.:
*G06F 3/038* (2013.01)     *G06F 3/033* (2013.01)
*A63F 13/00* (2014.01)     *G06F 3/03* (2006.01)
*G06F 3/0346* (2013.01)

(21) Application number: **06021949.0**

(22) Date of filing: **19.10.2006**

(54) **Information processing device and storage medium storing information processing program**

Informationsverarbeitungsvorrichtung und Speichermedium zum Abspeichern eines
Informationsverarbeitungsprogrammes.

Dispositif de traitement d'informations et support de stockage permettant de stocker un programme de
traitement d'informations

(84) Designated Contracting States:
**DE FR GB**

(30) Priority: **25.07.2006   JP 2006202405**

(43) Date of publication of application:
**06.02.2008   Bulletin 2008/06**

(73) Proprietor: **Nintendo Co., Ltd.
Kyoto  601-8501 (JP)**

(72) Inventor: **Dohta, Takuhiro
c/o Nintendo Co., Ltd.
Minami-ku
Kyoto 601-8501 (JP)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
**WO-A2-2005/043332     US-A- 5 602 566
US-A1- 2005 253 806     US-B1- 6 314 426**

EP 1 884 869 B1

## Description

BACKGROUND OF THE INVENTION

Field of the Invention

The present invention relates to an information processing device and a storage medium storing an information processing program and, more particularly, to an information processing device and a storage medium storing an information processing program for performing information processing operations based on button operations.

Description of the Background Art

International Publication WO00/64548 pamphlet (hereinafter "Patent Document 1") discloses a conventional controller device capable of detecting an analog control input on a control that can be pressed. The controller device disclosed in Patent Document 1 includes a plurality of controls that can be pressed down, and each control is provided with a detector element for detecting an analog amount by which the control is pressed down. As the detector element, Patent Document 1 discloses a pressure-sensitive element and a combination of a resistor and a conductive member provided along the path of the control being pushed in.

For example, a pressure-sensitive element outputs an analog value representing the displacement according to the amount by which the control is pushed in. Thus, an analog control input is detected. A combination of a resistor and a conductive member outputs an analog value of the resistance of the resistor varying according to its contact area with the conductive member, which varies according to the amount by which the control is pushed in. Thus, an analog control input is detected. Then, the analog output is converted to a digital value through an A/D converter section provided in each detector element. The variation of the digital value is used as the variation of the amount by which the control is pushed in, thus realizing an analog control input. It is stated that since the analog output obtained by using detector elements is easily affected by the individual difference between elements, aging, etc., calibration is necessary.

With such a structure, the controller device disclosed in Patent Document 1 is intended to detect an analog input for an operation of holding down the control over a relatively long period of time, and the controller device is insensitive to an operation of quickly pressing down the control. Moreover, the controller device is expensive because a detector element needs to be provided for each of the controls to be used for detecting an analog input. Accurate analog detection by the detector elements provided for the controls requires a troublesome operation of adjusting the variations between the detector elements through calibration.

US 2005/253806 discloses a free space pointing device which uses at least one sensor to detect motion of the hand-held device for controlling e.g. a cursor. Errant movements caused by pressing buttons are ignored. WO 2005/043332 A2 discloses concurrent data entry for a portable device wherein a tilt state of the device is determined while a button is being pressed.

US 6 314 426 B1 discloses information retrieval and display systems using a hand-held control unit wherein displayed information can be scrolled at a speed in accordance with the displacement of the control unit.

SUMMARY OF THE INVENTION

Therefore, an object of the present invention is to provide a novel information processing device and a novel information processing program capable of performing an analog detection of the load applied on a control button. This object is achieved by the invention as defined in the independent claims. The present invention has the following features to attain the object mentioned above. Note that parenthetic expressions in the following section (reference numerals, step numbers, etc.) are merely to indicate the correlation between what is described in the following section and what is described in the description of the preferred embodiments set out further below in the present specification, and are in no way intended to restrict the scope of the present invention.

A first aspect of the present invention is directed to an information processing device (3), including a housing (71), a plurality of control buttons (72) provided on a surface of the housing, and button data generation means (751) for, when one of the control buttons is operated, generating control button data (Da3) according to a kind of the control button, wherein the information processing device performs a predetermined information processing operation by using the control button data. The information processing device includes a motion sensor (701), data obtaining means (Da), data storage means (33D), magnitude calculation means (the CPU 30 performing S54, S56; hereinafter only the step numbers will be shown), and process performing means (S57, S83, S95). The motion sensor generates motion data (Da4) according to movement of the housing. The data obtaining means obtains the control button data and the motion data. The data storage means stores, as necessary, the motion data obtained by the data obtaining means in a memory (33). The magnitude calculation means calculates a magnitude of housing movement (pwr) at a point in time when the control button is operated, by using motion data already stored in the memory upon obtaining the control button data generated at the point in time and/or motion data stored in the memory after obtaining the control button data (id_now, id_end). The process performing means performs, based on the magnitude calculated by the magnitude calculation means, a process determined according to a kind of the control button data obtained by the data obtaining means.

Aside from ordinary personal computers, examples of the information processing device include home-console type video game devices, portable video game devices, mobile telephones, PDAs (Personal Digital Assistants), etc. With home-console type video game devices, the video game controller is typically separate from the video game device main unit. In such a case, the motion sensor generates motion data according to the movement of the housing of the video game controller. With portable devices such as portable video game devices, mobile telephones and PDAs, the housing is typically integral with the device assembly. In such a case, the motion sensor generates motion data according to the movement of the assembly of the portable device.

In a second aspect based on the first aspect, the magnitude calculation means calculates the magnitude of housing movement based on a change (w) of the motion data over a predetermined period of time already stored in the memory and/or a change (w) of the motion data stored in the memory over a predetermined period of time after obtaining the control button data.

In a third aspect based on the first aspect, the magnitude calculation means calculates, as the magnitude of housing movement, an amount of change in the motion data stored in the memory at, before or after a point in time when the control button data is obtained.

In a fourth aspect based on the first aspect, the magnitude calculation means calculates, as the magnitude of housing movement, a magnitude of the motion data stored in the memory at, before or after a point in time when the control button data is obtained.

In a fifth aspect based on the first aspect, the motion sensor is an acceleration sensor (701) for detecting an acceleration according to movement of the housing. The motion data is acceleration data representing an acceleration detected by the acceleration sensor. The data obtaining means obtains the acceleration data as the motion data. The data storage means stores, as necessary, the acceleration data in the memory as the motion data.

In a sixth aspect based on the first aspect, the motion sensor is a gyro sensor for detecting an angular velocity according to rotation of the housing. The motion data is angular velocity data representing the angular velocity detected by the gyro sensor. The data obtaining means obtains the angular velocity data as the motion data. The data storage means stores, as necessary, the angular velocity data in the memory as the motion data.

In a seventh aspect based on the second aspect, the magnitude calculation means calculates the magnitude of housing movement by accumulating an amount of change in the motion data over unit time by using the motion data, which has been obtained and stored in the memory from a point in time when the control button is operated until a predetermined amount of time (N) after the point in time.

In an eighth aspect based on the second aspect, the magnitude calculation means calculates the magnitude of housing movement by accumulating an amount of change in the motion data over unit time by using the motion data, which has been obtained and already stored in the memory from a predetermined amount of time (M) before a point in time when the control button is operated until the point in time.

In a ninth aspect based on the second aspect, the magnitude calculation means calculates the magnitude of housing movement by accumulating an amount of change in the motion data over unit time by using the motion data, which has been obtained and stored in the memory from a predetermined amount of time before a point in time when the control button is operated until a predetermined amount of time after the point in time.

In a tenth aspect based on the first aspect, the process performing means performs a sound output process, as determined by a first kind of the control button data, to output a sound from a speaker (2a) with a sound volume and/or a sound quality according to the magnitude calculated by the magnitude calculation means.

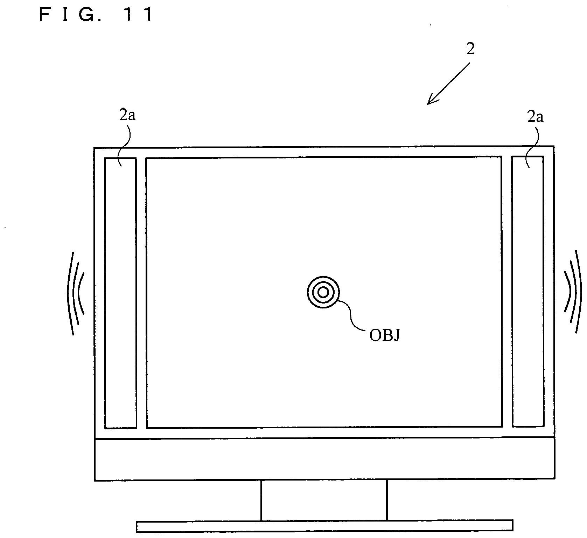

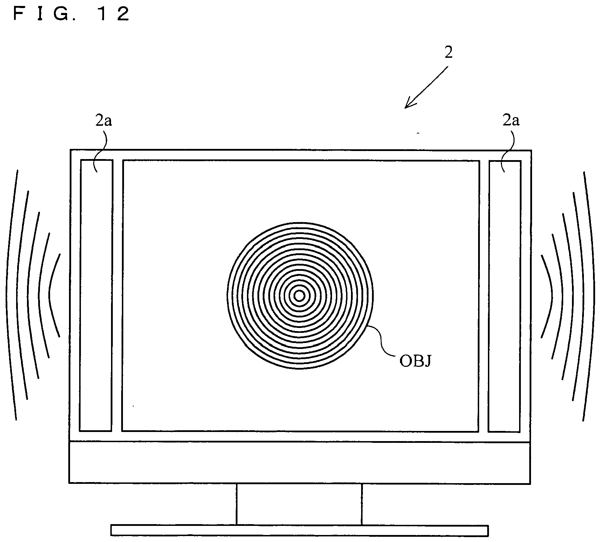

In an eleventh aspect based on the first aspect, the process performing means performs a first image display process, as determined by a second kind of the control button data, for displaying a first image (OBJ in FIGs. 11 and 12) on a screen of display means (2) to display the first image with a display size according to the magnitude calculated by the magnitude calculation means.

In a twelfth aspect based on the first aspect, the information processing device further includes evaluation data setting means for setting evaluation data representing a point in time for operating the control button and a reference value for the point in time. The process performing means compares the evaluation data with the point in time at which the control button is operated as indicated by the control button data obtained by the data obtaining means and the magnitude value calculated by the magnitude calculation means, thereby determining an evaluation value based on a result of the comparison.

In a thirteenth aspect based on the first aspect, the information processing device further includes parameter setting means for setting a parameter so that an action of an object in a virtual game world is varied according to the magnitude of movement. The process performing means performs a process, where the object is controlled in the virtual game world using the parameter set by the parameter setting means and displayed on a screen of display means, according to the control button data.

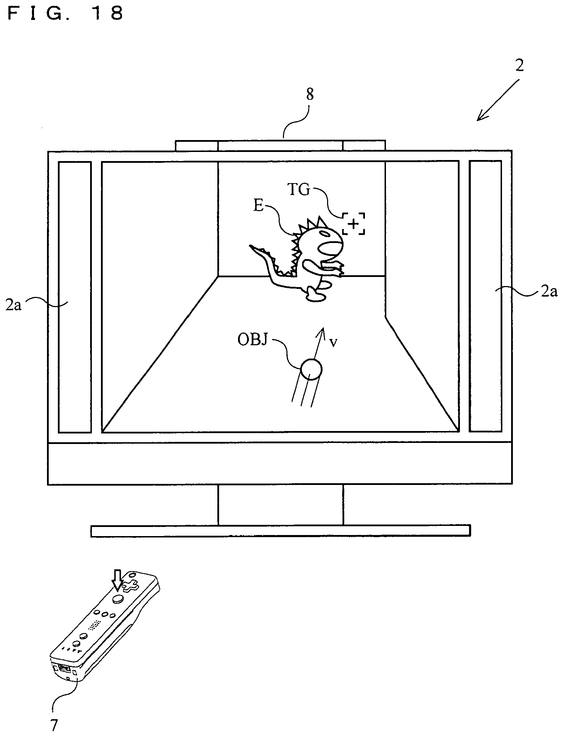

In a fourteenth aspect based on the first aspect, the information processing device further includes coordinate output means (74) for outputting data (Da1, Da2) specifying coordinates on a display screen of display means. The data obtaining means further obtains data outputted from the coordinate output means. The process performing means includes attribute setting means (S95), pointed position calculation means (S91), mark display control means (S92, S100), and object display control means (S99, S100). The attribute setting means sets a parameter (the moving speed v, the amount of damage to be imparted on other characters, etc.) of an object (OBJ in FIG. 18) in a virtual game world so that an attribute of the object is varied according to the magnitude calculated by the magnitude calculation means, and stores the parameter in the memory. The pointed position calculation means calculates, as a pointed position, a position on the display screen corresponding to the data outputted from the coordinate output means. The mark display control means calculates a target position in the virtual game world that overlaps a position on the display screen calculated by the pointed position calculation means, and displays a mark (TG) representing the target position on the display screen. The object display control means displays, on the display screen, an object whose attribute has been set by the attribute setting means moving toward the target position according to the control button data.

A fifteenth aspect of the present invention is directed to a mobile telephone including the information processing device of the first aspect, and communications means for wireless communications with another telephone.

A sixteenth aspect of the present invention is directed to a video game device including the information processing device of the first aspect. The housing is a housing of a video game controller. The video game controller includes the control button, the button data generation means, and the motion sensor.

A seventeenth aspect of the present invention is directed to a storage medium storing an information processing program for instructing a computer (30) of an information processing device to perform a predetermined information processing operation based on at least one of control button data and motion data, the information processing device including a housing, a plurality of control buttons provided on a surface of the housing, button data generation means for, when one of the control buttons is operated, generating the control button data according to a kind of the control button, and a motion sensor for generating the motion data according to movement of housing. The information processing program instructs the computer to perform a data obtaining step, a data storage step, a magnitude calculation step, and a process performing step. The data obtaining step is a step of obtaining the control button data and the motion data. The data storage step is a step of storing, as necessary, the motion data obtained in the data obtaining step in a memory. The magnitude calculation step is a step of calculating a magnitude of housing movement at a point in time when the control button is operated, by using motion data already stored in the memory upon obtaining the control button data generated at the point in time and/or motion data stored in the memory after obtaining the control button data. The process performing step is a step of performing, based on the magnitude calculated in the magnitude calculation step, a process determined according to a kind of the control button data obtained in the data obtaining step.

In an eighteenth aspect based on the seventeenth aspect, the magnitude calculation step is a step of calculating the magnitude of housing movement based on a change of the motion data over a predetermined period of time already stored in the memory and/or a change of the motion data stored in the memory over a predetermined period of time after obtaining the control button data.

In a nineteenth aspect based on the seventeenth aspect, the magnitude calculation step calculates, as the magnitude of housing movement, an amount of change in the motion data stored in the memory at, before or after a point in time when the control button data is obtained.

In a twentieth aspect based on the seventeenth aspect, the magnitude calculation step calculates, as the magnitude of housing movement, a magnitude of the motion data stored in the memory at, before or after a point in time when the control button data is obtained.

In a twenty-first aspect based on the seventeenth aspect, the motion sensor is an acceleration sensor for detecting an acceleration according to movement of the housing. The motion data is acceleration data representing an acceleration detected by the acceleration sensor. The data obtaining step is a step of obtaining the acceleration data as the motion data. The data storage step is a step of storing, as necessary, the acceleration data in the memory as the motion data.

In a twenty-second aspect based on the seventeenth aspect, the motion sensor is a gyro sensor for detecting an angular velocity according to rotation of the housing. The motion data is angular velocity data representing the angular velocity detected by the gyro sensor. The data obtaining step is a step of obtaining the angular velocity data as the motion data. The data storage step is a step of storing, as necessary, the angular velocity data in the memory as the motion data.

In a twenty-third aspect based on the eighteenth aspect, the magnitude calculation step is a step of calculating the magnitude of housing movement by accumulating an amount of change in the motion data over unit time by using the motion data, which has been obtained and stored in the memory from a point in time when the control button is operated until a predetermined amount of time after the point in time.

In a twenty-fourth aspect based on the eighteenth aspect, the magnitude calculation step is a step of calculating the magnitude of housing movement by accumulating an amount of change in the motion data over unit time by using the motion data, which has been obtained and already stored in the memory from a predetermined amount of time (M) before a point in time when the control button is operated until the point in time.

In a twenty-fifth aspect based on the eighteenth aspect, the magnitude calculation step is a step of calculating the magnitude of housing movement by accumulating an amount of change in the motion data over unit time by using the motion data, which has been obtained and stored in the memory from a predetermined amount of time before a point in time when the control button is operated until a predetermined amount of time after the point in time.

In a twenty-sixth aspect based on the seventeenth aspect, the process performing step is a step of performing a sound output process, as determined by a first kind of the control button data, to output a sound from a speaker with a sound volume and/or a sound quality according to the magnitude calculated in the magnitude calculation step.

In a twenty-seventh aspect based on the seventeenth aspect, the process performing step is a step of performing a first image display process, as determined by a second kind of the control button data, for displaying a first image on a screen of display means to display the first image with a display size according to the magnitude calculated in the magnitude calculation step.

In a twenty-eighth aspect based on the seventeenth aspect, the information processing program further instructs the computer to perform an evaluation data setting step. The evaluation data setting step is a step of setting evaluation data representing a point in time for operating the control button and a reference value for the point in time. The process performing step is a step of comparing the evaluation data with the point in time at which the control button is operated as indicated by the control button data obtained in the data obtaining step and the magnitude value calculated in the magnitude calculation step, thereby determining an evaluation value based on a result of the comparison.

In a twenty-ninth aspect based on the seventeenth aspect, The information processing program further instructs the computer to perform a parameter setting step. The parameter setting step is a step of setting a parameter so that an action of an object in a virtual game world is varied according to the magnitude of movement. The process performing step is a step of performing a process, where the object is controlled in the virtual game world using the parameter set in the parameter setting step and displayed on a screen of display means, according to the control button data.

In a thirtieth aspect based on the seventeenth aspect, in the data obtaining step, the process further obtains data outputted from coordinate output means for outputting data specifying coordinates on a display screen of display means. The process performing step includes an attribute setting step, a pointed position calculation step, a mark display control step, and an object display control step. The attribute setting step is a step of setting a parameter of an object in a virtual game world so that an attribute of the object is varied according to the magnitude calculated in the magnitude calculation step, and storing the parameter in the memory. The pointed position calculation step is a step of calculating, as a pointed position, a position on the display screen corresponding to the data outputted from the coordinate output means. The mark display control step is a step of calculating a target position in the virtual game world that overlaps a position on the display screen calculated in the pointed position calculation step, and displaying a mark representing the target position on the display screen. The object display control step is a step of displaying, on the display screen, an object whose attribute has been set in the attribute setting step moving toward the target position according to the control button data.

According to the first aspect, the movement of the housing at the point in time when the control button is pressed down is detected. Thus, with a configuration simpler than those in the prior art, it is possible to perform an analog detection of the operation performed on the control button, and to use the detected value in the information processing operation.

According to the second and third aspects, it is possible to obtain the magnitude of housing movement while eliminating the influence of the steady motion on the housing other than the button operation or a force always acting upon the housing (e.g., the gravitational acceleration).

According to the fourth aspect, it is possible to obtain an appropriate magnitude of housing movement when, for example, the housing is not moving steadily or the motion data generation means has a function of not detecting the force always acting upon the housing.

According to the fifth aspect, it is possible to implement the motion sensor by means of an acceleration sensor for detecting the acceleration of the housing.

According to the sixth aspect, it is possible to implement the motion sensor by means of a gyro sensor for detecting the angular velocity of the housing.

According to the seventh aspect, the magnitude of housing movement is obtained by accumulating the motion data differences occurring after the OFF-to-ON transition of the control button, the operation being triggered by the OFF-to-ON transition. Thus, it is possible to calculate the load of pressing down the control button. For example, it is possible to calculate the impact imparted on the housing as the control button is pushed in after the control button is pressed down.

According to the eighth aspect, the magnitude of housing movement is obtained by accumulating the motion data differences occurring before the OFF-to-ON transition of the control button, the operation being triggered by the OFF-to-ON transition. Thus, it is possible to calculate the load of pressing down the control button. For example, it is possible to calculate the load on the housing during a stroke of pushing in the control button.

According to the ninth aspect, the magnitude of housing movement is obtained by accumulating the motion data differences occurring before and after the OFF-to-ON transition of the control button, the operation being triggered by the OFF-to-ON transition. Thus, it is possible to calculate the load of pressing down the control button. For example, it is possible to calculate the load on the housing during a stroke of pushing in the control button, or the impact imparted on the housing as the control button is pushed in after the control button is pressed down.

According to the tenth aspect, the sound volume or the sound quality of the sound outputted from the speaker can be varied according to the magnitude of housing movement (e.g., the load of pressing down the control button).

According to the eleventh aspect, the size of the object displayed on the screen of the display means can be varied according to the magnitude of housing movement (e.g., the load of pressing down the control button).

According to the twelfth aspect, the point in time at which the control button is operated and the magnitude of housing movement (e.g. , the load of pressing down the control button) can be utilized, whereby it is possible to realize a music video game where the player tries to hit a percussion instrument, such as a drum, at a specified time with a specified strength as precisely as possible.

According to the thirteenth aspect, the action of an object in the virtual game world (e.g., the moving speed, or the height to which the object can jump) can be varied according to the magnitude of housing movement (e.g., the load of pressing down the control button).

According to the fourteenth aspect, as the player presses down the control button hard, the object can be given an attribute according to the load on the control button. However, the housing is then jerked substantially, which will also jerk the position on the screen specified by data from coordinate output means of a pointing device, or the like, provided in the housing, thus shifting the target position being set according to the specified position. Then, the direction of the object movement will be shifted. Thus, there is provided a novel control environment, where the player is required to appropriately adjust the press-down load and the accompanying jerk of the assembly.

The mobile telephone and the video game device of the present invention provide similar effects to those of the information processing device set forth above. Moreover, with the storage medium storing an information processing program of the present invention, it is possible to obtain similar effects to those of the information processing device set forth above as the information processing program is executed by a computer.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 shows an external view of a video game system 1 in one embodiment of the present invention;

FIG. 2 is a functional block diagram showing a video game device main unit 5 of FIG. 1;

FIG. 3 is a perspective view showing a controller 7 of FIG. 1 as viewed from the upper rear side;

FIG. 4 is a perspective view showing the controller 7 of FIG. 3 as viewed from the lower front side;

FIG. 5 is a perspective view showing the controller 7 of FIG. 3 with an upper housing taken off;

FIG. 6 is a perspective view showing the controller 7 of FIG. 3 with a lower housing taken off;

FIG. 7 is a block diagram showing a configuration of the controller 7 of FIG. 3;

FIG. 8A shows the controller 7 being held in the player's right hand, as viewed from the front side;

FIG. 8B shows the controller 7 being held in the player's right hand, as viewed from the left side;

FIG. 9 shows how the controller 7 sways when a control button 72d is pressed down hard with the thumb;

FIG. 10 shows viewing angles of markers 8L and 8R and that of an image capturing/processing section 74;

FIG. 11 shows the volume of a sound reproduced from a speaker 2a and an object OBJ displayed on a display screen of a monitor 2;

FIG. 12 shows the volume of a sound reproduced from the speaker 2a and the object OBJ displayed on the display screen of the monitor 2;

FIG. 13 shows a video game program and data stored in a main memory 33 of the video game device main unit 5;

FIG. 14 is a flow chart showing the process performed by the video game device main unit 5;

FIG. 15 shows, in detail, a subroutine of step 54 of FIG. 14 for the acceleration information storing process;

FIG. 16 shows, in detail, a subroutine of step 56 of FIG. 14 for the button information reading process;

FIG. 17 shows, in detail, a subroutine of step 57 of FIG. 14 for the game main process;

FIG. 18 shows a game image of a video game where the game process is performed according to the press-down load, using the first position data Da1 and the second position data Da2; and

FIG. 19 shows, in detail, another subroutine of step 57 of FIG. 14 for the game main process.

DESCRIPTION OF THE PREFERRED EMBODIMENTS

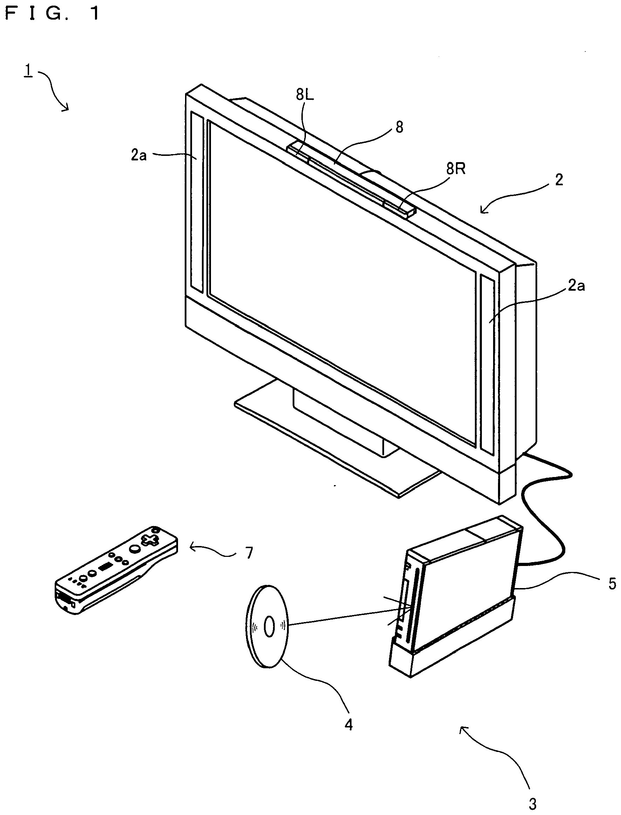

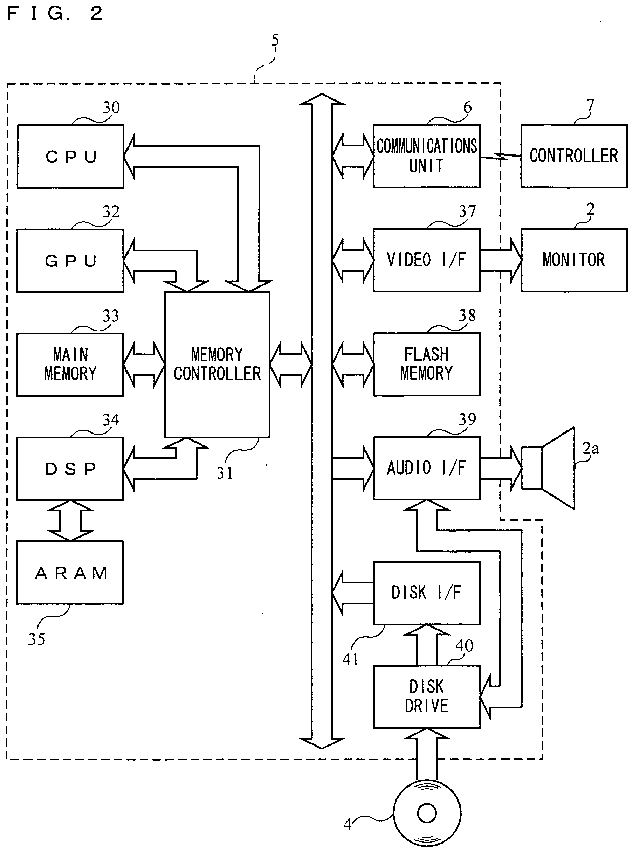

Referring to FIG. 1, an information processing device according to one embodiment of the present invention will be described. A video game system including a home-console type video game device, being an example of the information processing device, will now be described as a specific example of the present invention. FIG. 1 is an external view of a video game system 1 including a home-console type video game device 3, and FIG. 2 is a block diagram of a video game device main unit 5. The video game system 1 will now be described.

Referring to FIG. 1, the video game system 1 includes a home television receiver (hereinafter "monitor") 2 being an example of the display means, and a the home-console type video game device 3 connected to the monitor 2 via a connection cord. The monitor 2 includes a speaker 2a for outputting a sound signal received from the video game device main unit 5. The video game device 3 includes an optical disc 4, the video game device main unit 5 and a controller 7. The optical disc 4 stores a video game program, being an example of the information processing program of the present invention. The video game device main unit 5 includes a computer for executing the video game program on the optical disc 4 to display a game screen on the monitor 2. The controller 7 gives the video game device main unit 5 control information, which is used for controlling a game character, etc., displayed on the game screen.

The video game device main unit 5 includes a communications unit 6 therein. The communications unit 6 receives data wirelessly transmitted from the controller 7 and transmits data from the video game device main unit 5 to the controller 7, and the controller 7 and the video game device main unit 5 are connected via wireless communications. The video game device main unit 5 includes the optical disc 4, being an example of an information storage medium that can be received by the video game device main unit 5. Provided on the front principal plane of the video game device main unit 5 are an ON/OFF switch for turning ON/OFF the video game device main unit 5, a reset switch for resetting a game process, a slot for receiving the optical disc 4, an eject switch for ejecting the optical disc 4 out of the slot of the video game device main unit 5, etc.

The video game device main unit 5 also includes a flash memory 38 serving as a backup memory for statically storing save data, or the like. The video game device main unit 5 executes a video game program, or the like, stored in the optical disc 4 to obtain a game image, and displays the obtained game image on the monitor 2. The video game device main unit 5 may reproduce a past game status from save data stored in the flash memory 38 to obtain a game image for that past game status, and display the obtained game image on the monitor 2. Then, the player of the video game device main unit 5 can enjoy the game process by operating the controller 7 while watching the game image displayed on the monitor 2.

The controller 7 wirelessly transmits transmit data such as control information to the video game device main unit 5 including the communications unit 6 therein by means of a technique such as Bluetooth (registered trademark), for example. The controller 7 is control means for controlling primarily a player object, or the like, to be present in the game space displayed on the display screen of the monitor 2. The controller 7 includes a housing of such a size that the controller 7 can be held in one hand, and a plurality of control buttons (including a cross-shaped key, a stick, etc.) exposed on the surface of the housing. As will be more apparent from the following description, the controller 7 includes an image capturing/processing section 74 for capturing an image as viewed from the controller 7. As an example of imaging targets to be captured by the image capturing/processing section 74, two LED modules (hereinafter "markers") 8L and 8R are provided around the display screen of the monitor 2. The markers 8L and 8R output infrared light to the front side of the monitor 2. Alternatively, the controller 7 can receive, at a communications section 75 thereof, the transmit data wirelessly transmitted from the communications unit 6 of the video game device main unit 5, thereby generating a sound or a vibration according to the transmit data.

Referring to FIG. 2, the video game device main unit 5 includes a CPU (Central Processing Unit) 30, for example, for executing various programs. The CPU 30 executes a boot program stored in a boot ROM (not shown), thus initializing memory devices, such as a main memory 33, and then executes a video game program stored in the optical disc 4 to perform a game process, etc., according to the video game program. Connected to the CPU 30 via a memory controller 31 are a GPU (Graphics Processing Unit) 32, the main memory 33, a DSP (Digital Signal Processor) 34, an ARAM (Audio RAM) 35, etc. The memory controller 31 is connected, via a predetermined bus, to the communications unit 6, a video I/F (interface) 37, the flash memory 38, an audio I/F 39 and a disk I/F 41, which are connected to the monitor 2, the speaker 2a and a disk drive 40, respectively.

The GPU 32 is responsible for image processing based on instructions from the CPU 30, and is a semiconductor chip, for example, capable of computations necessary for 3D graphics display. The GPU 32 performs the image process by using a memory dedicated for image processing (not shown) or a part of the memory area of the main memory 33. The GPU 32 produces game image data or movie data to be displayed on the monitor 2 using these memory areas, and outputs the produced data to the monitor 2 via the memory controller 31 and the video I/F 37 as necessary.

The main memory 33 is a memory area used by the CPU 30, and stores a video game program, etc., as necessary for processes performed by the CPU 30. For example, the main memory 33 stores the video game program loaded from the optical disc 4 by the CPU 30 and various data, etc. The video game program, the various data, etc., stored in the main memory 33 are executed or processed by the CPU 30.

The DSP 34 is for processing sound data, etc., produced by the CPU 30 when executing the video game program, and is connected to the ARAM 35 for storing the sound data, etc. The ARAM 35 is used when the DSP 34 performs a predetermined process (e.g., storing a video game program, sound data, etc., which have been loaded in advance). The DSP 34 reads out the sound data stored in the ARAM 35, and outputs the sound data through the speaker 2a provided in the monitor 2 via the memory controller 31 and the audio I/F 39.

The memory controller 31 is responsible for the overall control of data transfers, and is connected to the various I/F's described above. As described above, the communications unit 6 receives transmit data from the controller 7, and outputs the transmit data to the CPU 30. The communications unit 6 transmits the transmit data outputted from the CPU 30 to the communications section 75 of the controller 7. The monitor 2 is connected to the video I/F 37. The speaker 2a provided in the monitor 2 is connected to the audio I/F 39 so that the sound data read out from the ARAM 35 by the DSP 34 or the sound data outputted directly from the disk drive 40 can be outputted through the speaker 2a. The disk drive 40 is connected to the disk I/F 41. The disk drive 40 reads out data from the optical disc 4 placed in a predetermined read-out position, and outputs the data to the bus or the audio I/F 39 of the video game device main unit 5.

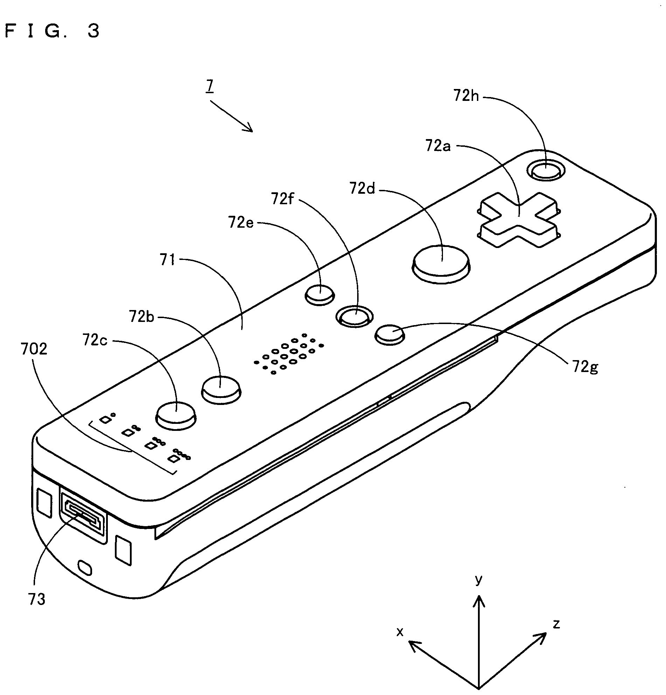

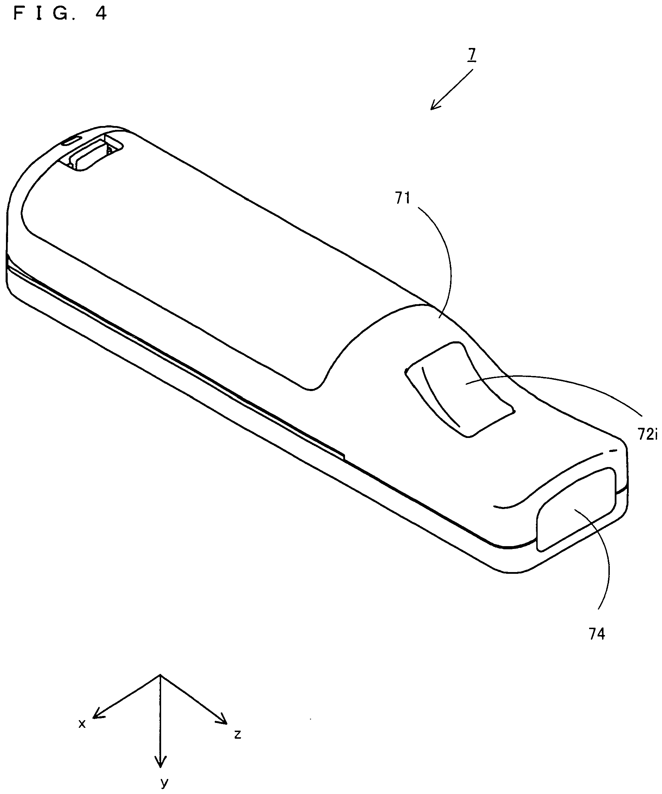

Referring now to FIGs. 3 and 4, the controller 7 will be described. FIG. 3 is a perspective view showing the controller 7 as viewed from the upper rear side. FIG. 4 is a perspective view showing the controller 7 as viewed from the lower front side.

The controller 7 shown in FIGs. 3 and 4 includes a housing 71 and a control section 72 including a plurality of control buttons provided on the surface of the housing 71. The housing 71 of the present embodiment has a generally rectangular parallelepiped shape, with the longitudinal direction being the front-rear direction, has an overall size such that it can be held in a hand of an adult or a child, and is formed by molding a plastic material, for example.

A cross-shaped key 72a is provided on the upper surface of the housing 71, centered in the left-right direction and near the front end. The cross-shaped key 72a is a cross-shaped four-way push switch, in which four control portions associated with four different directions (forward, backward, left and right) are provided in the protruding portions of the cross shape while being spaced apart from one another by 90°. The player can select one of the forward, backward, left and right directions by pressing down a corresponding one of the control portions of the cross-shaped key 72a. For example, the player can control the cross-shaped key 72a to move a player character, etc. , in a virtual game world in a certain direction, or make a selection from among a plurality of options.

While the cross-shaped key 72a is a control section that outputs an operation signal according to a direction input operation by the player, it may be any other suitable type of a control section. For example, the control section may include four push switches arranged in a cross-shaped pattern so as to output an operation signal according to the push switch being pressed by the player. Alternatively, in addition to the four push switches, a center switch may be provided at the center of the cross-shaped push switch arrangement, thus providing a control section including four push switches combined with a center switch. Alternatively, the cross-shaped key 72a may be replaced by a stick-shaped control section (so-called a "joy stick") protruding from the upper surface of the housing 71, which outputs an operation signal according to the direction in which it is tilted. Alternatively, the cross-shaped key 72a may be replaced by a horizontally-movable (slidable) disc-shaped control section, which outputs an operation signal according to the direction in which it is slid. Alternatively, the cross-shaped key 72a may be replaced by a touch pad.

A plurality of control buttons 72b to 72g are provided on the upper surface of the housing 71, closer to the rear end with respect to the cross-shaped key 72a. The control buttons 72b to 72g are control sections, each of which outputs an operation signal associated therewith when being pressed by the player. For example, the control buttons 72b to 72d may be assigned a function as a first button, a second button and an A button, respectively. For example, the control buttons 72e to 72g may be assigned a function as a minus button, a home button and a plus button, respectively. Each of the control buttons 72a to 72g is assigned a function as specified in the video game program executed by the video game device main unit 5. In the arrangement shown in FIG. 3, the control buttons 72b to 72d are arranged in the forward-backward direction while being centered in the left-right direction on the upper surface of the housing 71. The control buttons 72e to 72g are arranged in the left-right direction between the control buttons 72b and 72d on the upper surface of the housing 71. The control button 72f is buried under the upper surface of the housing 71 so as to prevent the player from pressing the button unintentionally.

A control button 72h is provided on the upper surface of the housing 71, closer to the front end with respect to the cross-shaped key 72a. The control button 72h is a power switch for remotely turning ON/OFF the power of the video game device main unit 5 from a remote position. The control button 72h is also buried under the upper surface of the housing 71 so as to prevent the player from pressing the button unintentionally.

A plurality of LEDs 702 are provided on the upper surface of the housing 71, closer to the rear end with respect to the control button 72c. The controller 7 is given a controller ID (number) for identifying the controller 7 from others. The LEDs 702 may, for example, be used for notifying the player of the controller ID being currently assigned to the controller 7. Specifically, when transmit data is transmitted from the controller 7 to the communications unit 6, one or more of the LEDs 702 are lit depending on the controller ID.

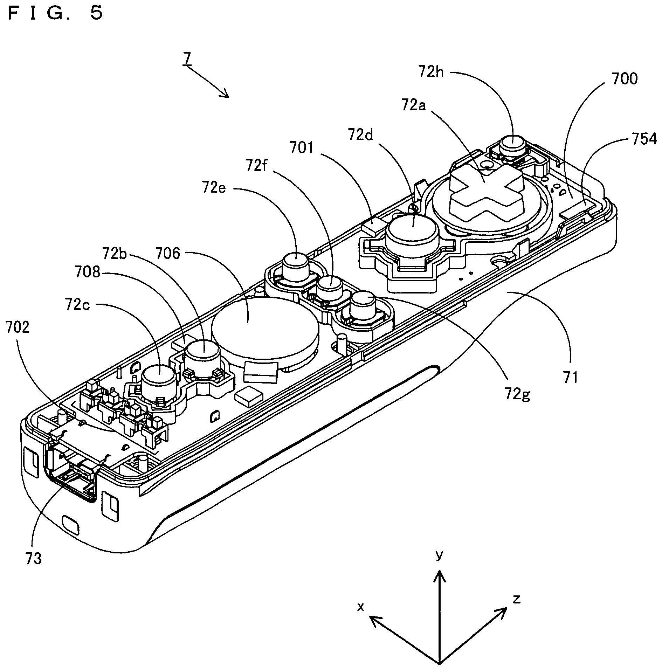

Sound slits are formed in the upper surface of the housing 71 between the control button 72b and the control buttons 72e to 72g for allowing the sound from a speaker (a speaker 706 in FIG. 5) to be described later to pass therethrough.

A depressed portion is formed on the lower surface of the housing 71. As will later be more apparent, the depressed portion of the lower surface of the housing 71 is located where the index or middle finger of the player lies when the player holds the controller 7 from the front side thereof aiming toward the markers 8L and 8R. A control button 72i is provided on a slope on the rear side of the depressed portion. For example, the control button 72i is a control section that functions as a B button.

An image sensing device 743, forming a part of the image capturing/processing section 74, is formed on the front side of the housing 71. The image capturing/processing section 74 is a system for analyzing image data obtained by the controller 7 to determine each spot with high luminance and then to detect the centroid and the size thereof, and has a maximum sampling frequency of about 200 frames per second, for example, and is thus capable of following fast movements of the controller 7. The details of the configuration of the image capturing/processing section 74 will be described later. A connector 73 is provided on the rear side of the housing 71. The connector 73 is, for example, an edge connector, and is used for connection between the controller 7 and a connection cable, which can be fitted into the connector 73.

A coordinate system used herein with respect to the controller 7 will be defined below. An x, y and z axis are defined with respect to the controller 7 as shown in FIGs. 3 and 4. Specifically, the z axis is defined along the longitudinal direction of the housing 71, being the front-rear direction of the controller 7, and the direction from the rear surface to the front surface (the surface on which the image capturing/processing section 74 is provided) of the controller 7 is defined as the z-axis positive direction. The y axis is defined along the up-down direction of the controller 7, and the direction from the upper surface to the lower surface (the surface on which the control button 72i is provided) of the housing 71 is defined as the y-axis positive direction. The x axis is defined along the left-right direction of the controller 7, and the direction from the right side to the left side (the side which is hidden in FIG. 3 and shown in FIG. 4) of the housing 71 is defined as the x-axis positive direction.

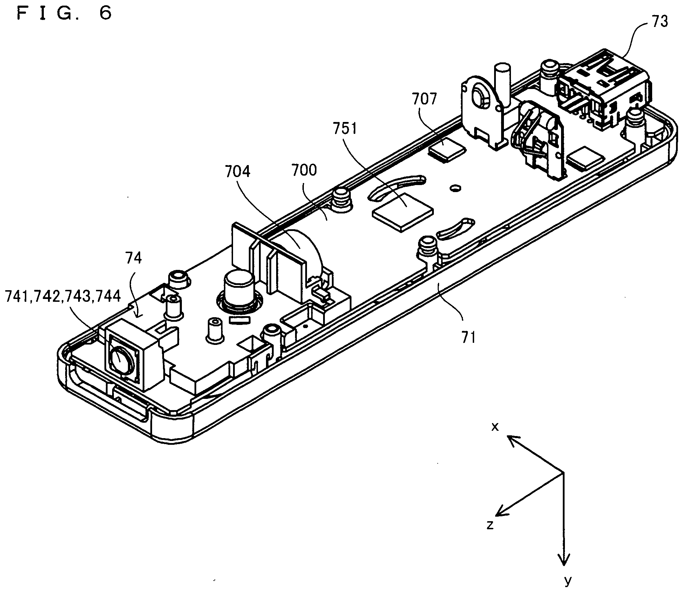

Referring now to FIGs. 5 and 6, an internal configuration of the controller 7 will be described. FIG. 5 is a perspective view showing the controller 7 with an upper casing (a part of the housing 71) taken off, as viewed from the rear side. FIG. 6 is a perspective view showing the controller 7 with a lower casing (a part of the housing 71) taken off, as viewed from the front side. FIG. 5 shows one side of a substrate 700, and FIG. 6 shows the other side thereof.

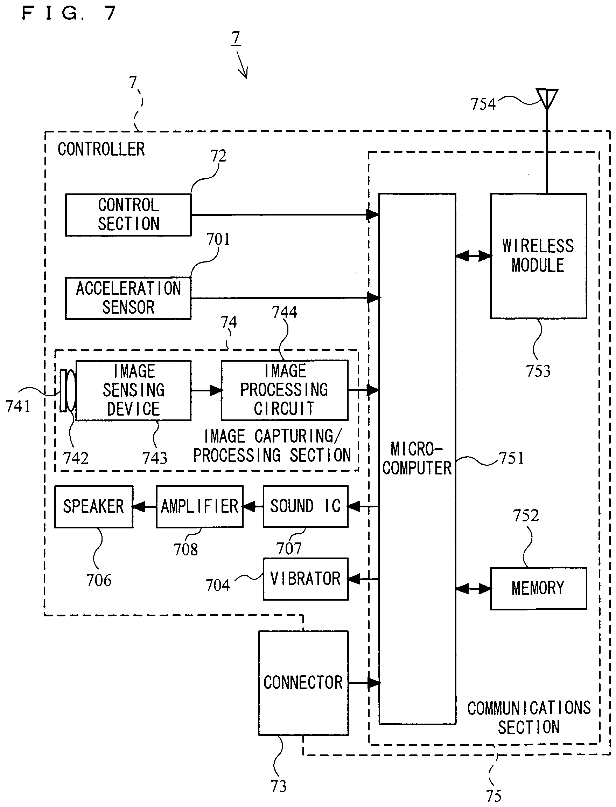

In FIG. 5, the substrate 700 is secured in the housing 71, and the control buttons 72a to 72h, an acceleration sensor 701, the LEDs 702, an antenna 754, etc., are provided on the upper principal plane of the substrate 700. These components are connected to a microcomputer 751 (see FIGs. 6 and 7), etc., via lines (not shown) formed on the substrate 700, etc. The microcomputer 751, being an example of the button data generation means of the present invention, functions to generate control button data according to a kind of the control button, such as the control button 72a. The mechanism is known in the art. For example, the microcomputer 751 detects the closing/opening of a line by means of a switch mechanism such as a tactile switch provided under the keytop. More specifically, when a control button is operated (e.g., pressed), a line is closed and electricity is conducted through the line, which can be detected by the microcomputer 751 to determine the control button being operated, and the microcomputer 751 can generate a signal according to the kind of the control button.

With a wireless module 753 (not shown in FIGs. 5 and 6; see FIG. 7) and the antenna 754, the controller 7 can function as a wireless controller. A quartz oscillator 703 (not shown in FIGs. 5 and 6) is provided inside the housing 71, and generates a basic clock for the microcomputer 751 to be described later. The speaker 706 and an amplifier 708 are provided on the principal surface of the substrate 700. The acceleration sensor 701 is provided on the left side of the control button 72d on the substrate 700 (i.e., in a peripheral portion, but not a central portion, of the substrate 700). Therefore, as the controller 7 rotates about an axis in the longitudinal direction, the acceleration sensor 701 can detect the acceleration including a centrifugal component, in addition to the change in the direction of the gravitational acceleration, whereby the video game device main unit 5, etc., can determine, with a desirable sensitivity, the rotation of the controller 7 based on the detected acceleration data by using a predetermined calculation.

Referring to FIG. 6, the image capturing/processing section 74 is provided at the front edge on the lower principal plane of the substrate 700. The image capturing/processing section 74 includes an infrared filter 741, a lens 742, the image sensing device 743 and an image processing circuit 744 provided in this order from the front side of the controller 7, and these components are provided on the lower principal plane of the substrate 700. The connector 73 is provided at the rear edge on the lower principal plane of the substrate 700. A sound IC 707 and the microcomputer 751 are provided on the lower principal surface of the substrate 700. The sound IC 707 is connected to the microcomputer 751 and the amplifier 708 via a line formed on the substrate 700, etc., and outputs a sound signal to the speaker 706 via the amplifier 708 according to sound data transmitted from the video game device main unit 5.

A vibrator 704 is attached to the lower principal surface of the substrate 700. The vibrator 704 may be, for example, a vibrating motor or a solenoid. The vibrator 704 is connected to the microcomputer 751 via a line formed on the substrate 700, etc. , and is turned ON/OFF based on the vibration data transmitted from the video game device main unit 5. As the vibrator 704 is actuated, the controller 7 is vibrated, and the vibration is transmitted to the hand of the player holding the controller 7, thus realizing a video game with vibration feed back. The vibrator 704 is positioned slightly closer to the front edge of the housing 71, whereby the housing 71 can vibrate more powerfully while the housing 71 is being held by the player, who is thus more likely to feel the vibration.

Referring now to FIG. 7, an internal configuration of the controller 7 will be described. FIG. 7 is a block diagram showing a configuration of the controller 7.

Referring to FIG. 7, in addition to the control section 72, the image capturing/processing section 74, the acceleration sensor 701, the vibrator 704, the speaker 706, the sound IC 707 and the amplifier 708, the controller 7 includes therein the communications section 75.

The image capturing/processing section 74 includes the infrared filter 741, the lens 742, the image sensing device 743 and the image processing circuit 744. The infrared filter 741 passes only an infrared portion of incident light entering the controller 7 from the front side. The lens 742 condenses the infrared light passing through the infrared filter 741, and outputs the condensed infrared light to the image sensing device 743. The image sensing device 743 is a solid-state image sensing device, such as a CMOS sensor or a CCD, for capturing the infrared light condensed through the lens 742. Therefore, the image sensing device 743 produces image data by capturing only the infrared light that has passed through the infrared filter 741. The image data produced by the image sensing device 743 is processed in the image processing circuit 744. Specifically, the image processing circuit 744 processes the image data obtained from the image sensing device 743 to detect high-luminance portions and obtain positions and areas thereof, and the image processing circuit 744 outputs the process result data representing the obtained positions and areas to the communications section 75. The image capturing/processing section 74 is secured in the housing 71 of the controller 7, and the image-capturing direction can be changed by changing the direction of the housing 71 itself. As will later be more apparent, it is possible to obtain a signal according to the position or movement of the controller 7 based on the process result data outputted from the image capturing/processing section 74.

It is preferred that the controller 7 includes a 3-axis (x, y and z) acceleration sensor 701. The acceleration sensor 701 detects the linear acceleration in each of three directions, i. e. , the up-down direction, the left-right direction and the forward-backward direction. In other embodiments, the acceleration sensor 701 may be a 2-axis acceleration detection means capable of detecting the linear acceleration in each of only two directions, i.e., the up-down direction and the left-right direction (or any other pair of directions), depending on the types of control signals used in the game process. For example, the 3- or 2-axis acceleration sensor 701 may be of the type available from Analog Devices, Inc., or STMicroelectronics N.V. The acceleration sensor 701 may be a capacitance type (capacitance-coupling type) sensor based on the technique of MEMS (MicroElectroMechanical Systems) using a silicon microfabrication process. However, the 3- or 2-axis acceleration sensor 701 may be provided by other existing acceleration detection means (e.g., a piezoelectric sensor or a piezoelectric resistance sensor) or any suitable technique to be developed in the future.

As is known to those skilled in the art, acceleration detection means of a type that is used as the acceleration sensor 701 is capable of detecting only an acceleration along a straight line corresponding to each of the axes of the acceleration sensor (linear acceleration). Thus, the output directly from the acceleration sensor 701 is a signal representing the linear acceleration (static or dynamic) along each of the two or three axes. Therefore, the acceleration sensor 701 cannot directly detect a physical property, e.g., the movement, rotation, revolution, angular displacement, inclination, position or orientation, along a non-linear (e.g., arc-shaped) path.

However, it will be readily understood by those skilled in the art upon reading the present embodiment that other information regarding the controller 7 can be estimated or calculated through an additional operation on an acceleration signal outputted from the acceleration sensor 701. For example, if a static acceleration (gravitational acceleration) is detected, it is possible to estimate the inclination of the object (the controller 7) with respect to the gravity vector based on a calculation with the inclination angle and the detected acceleration using the output from the acceleration sensor 701. Thus, by using the acceleration sensor 701 in combination with the microcomputer 751 (or another processor), it is possible to determine the inclination, orientation or position of the controller 7. Similarly, when the controller 7 including the acceleration sensor 701 is moved while being dynamically accelerated with a hand of the user, for example, it is possible to calculate or estimate various movements and/or positions of the controller 7 by processing the acceleration signal produced by the acceleration sensor 701. In other embodiments, the acceleration sensor 701 may include a built-in or otherwise dedicated signal processing device for performing a desired operation on the acceleration signal outputted from the acceleration detection means provided in the acceleration sensor 701, before outputting the signal to the microcomputer 751. For example, where the acceleration sensor is for detecting a static acceleration (e.g. , the gravitational acceleration), the built-in or dedicated signal processing device may be a device for converting the detected acceleration signal to a corresponding inclination angle. Acceleration data detected by the acceleration sensor 701 is outputted to the communications section 75.

In an alternative embodiment, a gyro sensor including a rotating element or a vibrating element therein may be used as a motion sensor for detecting the movement of the controller 7. A MEMS gyro sensor to be used in such an embodiment may be a sensor available from Analog Devices, Inc. As opposed to the acceleration sensor 701, a gyro sensor can directly detect the rotation (or angular velocity) about the axis of at least one gyro element provided therein. Thus, a gyro sensor and an acceleration sensor are fundamentally different from each other. Therefore, depending on which device is used for each particular purpose, the output signal from the device needs to be processed accordingly.

If a gyro sensor is used, instead of an acceleration sensor, for calculating the inclination or orientation, a substantial modification is needed. Specifically, where a gyro sensor is used, the inclination value is initialized at the start of detection. Then, the angular velocity data outputted from the gyro sensor are integrated together. Then, the amount of change from the initial inclination value is calculated. Then, the calculated inclination is a value corresponding to the angle. If an acceleration sensor is used to calculate the inclination, the value of a component of the gravitational acceleration for each axis is compared with a predetermined reference. Therefore, the calculated inclination can be expressed in a vector, and it is possible, without initialization, to obtain an absolute direction detected by the acceleration detection means. Moreover, the value calculated as the inclination is an angle when a gyro sensor is used, whereas it is a vector when an acceleration sensor is used. Therefore, if a gyro sensor is used instead of an acceleration sensor, it is necessary to perform a predetermined conversion on the inclination data while taking into consideration the differences between the two devices. As are the basic differences between an acceleration detection means and a gyroscope, the characteristics of a gyroscope are known to those skilled in the art. Therefore, further details will not be discussed herein. A gyro sensor is advantageously capable of directly detecting a rotation, whereas an acceleration sensor, when applied to a controller of a type that is used in the present embodiment, has a better cost efficiency than that of the gyro sensor.

The communications section 75 includes the microcomputer 751, a memory 752, the wireless module 753 and the antenna 754. The microcomputer 751 controls the wireless module 753 for wirelessly transmitting transmit data while using the memory 752 as a memory area. Moreover, the microcomputer 751 controls the sound IC 707 and the vibrator 704 according to the data from the video game device main unit 5 received by the wireless module 753 via the antenna 754. The sound IC 707 processes sound data, etc. , transmitted from the video game device main unit 5 via the communications section 75. The microcomputer 751 controls the vibrator 704 according to vibration data (e.g., a signal for turning ON/OFF the vibrator 704), etc. , transmitted from the video game device main unit 5 via the communications section 75.

An operation signal (key data) from the control section 72 provided in the controller 7, an acceleration signal (the x-, y-and z-axis direction acceleration data; hereinafter "acceleration data") from the acceleration sensor 701 and process result data from the image capturing/processing section 74 are outputted to the microcomputer 751. The microcomputer 751 temporarily stores the received data (the key data, the acceleration data and the process result data) in the memory 752 as transmit data to be transmitted to the communications unit 6. Data are wirelessly transmitted from the communications section 75 to the communications unit 6 at regular intervals. Since the game process typically proceeds in a cycle of 1/60 second, the interval should be shorter than 1/60 second. Specifically, the game process proceeds in a cycle of 16.7 ms (1/60 second), and the data transmission interval of the communications section 75 using the Bluetooth (registered trademark) technique is 5 ms. When it is time to transmit data to the communications unit 6, the microcomputer 751 outputs, as a series of control information, transmit data stored in the memory 752 to the wireless module 753. The wireless module 753 uses a technique such as Bluetooth (registered trademark) to transform control information into a radio wave signal using a carrier of a predetermined frequency, and radiates the radio wave signal from the antenna 754. Thus, the key data from the control section 72 provided in the controller 7, the acceleration data from the acceleration sensor 701 and the process result data from the image capturing/processing section 74 are transformed into a radio wave signal by the wireless module 753 and transmitted from the controller 7. The radio wave signal is received by the communications unit 6 of the video game device main unit 5, and is demodulated and decoded by the video game device main unit 5, thereby obtaining the series of control information (the key data, the acceleration data and the process result data) . The CPU 30 of the video game device main unit 5 performs the game process based on the obtained control information and the video game program. Where the communications section 75 uses a Bluetooth (registered trademark) technique, the communications section 75 can also receive transmit data wirelessly transmitted from other devices.

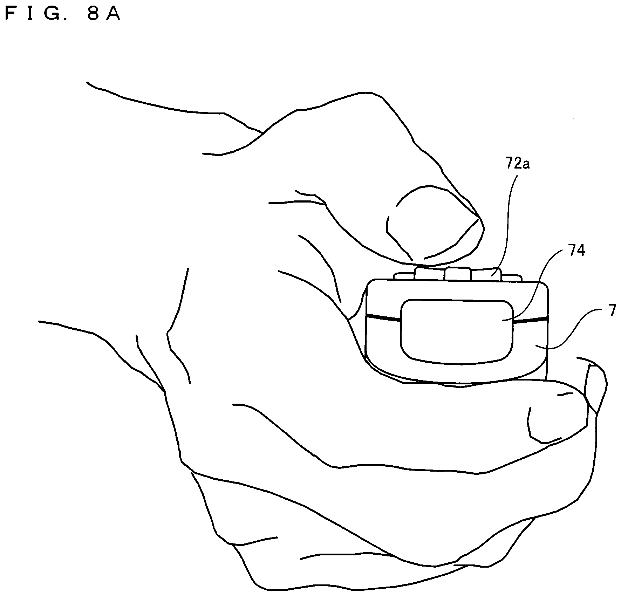

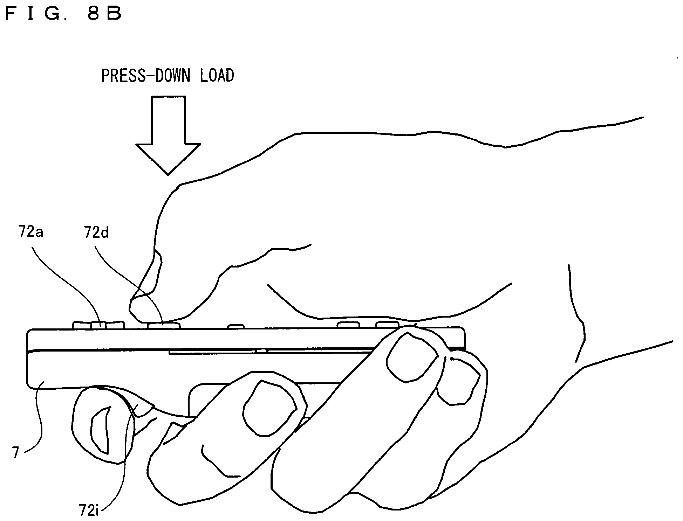

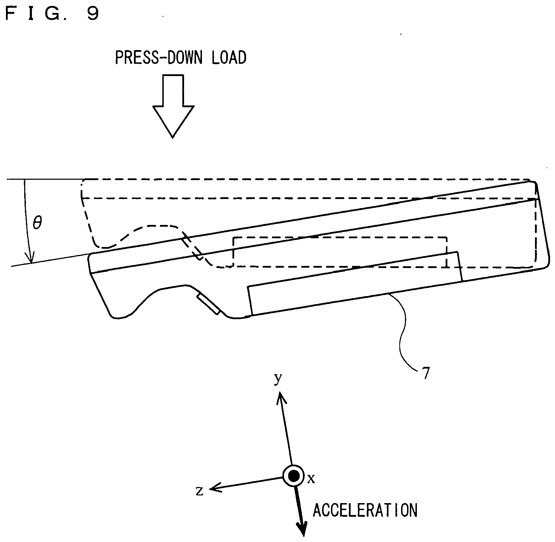

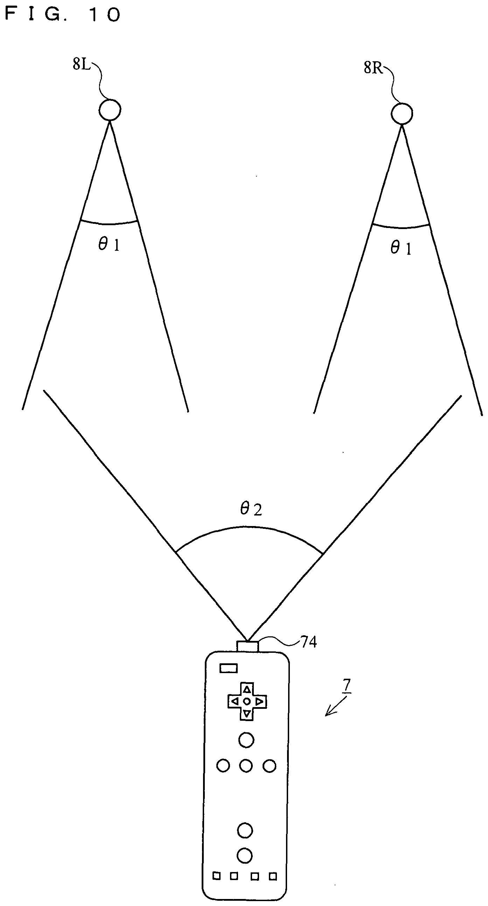

Referring now to FIGs. 8 to 12, the process performed by the video game device main unit 5 will be outlined, before describing the process in detail. FIG. 8A shows the controller 7 being held in the player's right hand, as viewed from the front side. FIG. 8B shows the controller 7 being held in the player's right hand, as viewed from the left side. FIG. 9 shows how the controller 7 sways when a control button 72d is pressed down hard with the thumb. FIG. 10 shows viewing angles of markers 8L and 8R and that of an image capturing/processing section 74. FIGs. 11 and 12 each show the volume of a sound reproduced from the speaker 2a and an object OBJ displayed on the display screen of the monitor 2.

As shown in FIGs. 8A and 8B, when the player operates the controller 7, the player holds the controller 7 in one hand (e. g. , the right hand), for example. The player operates the controller 7 with the thumb on the upper surface of the controller 7 (e.g., near the control button 72d) and the index finger in the depressed portion (e.g., near the control button 72i) on the lower surface of the controller 7. It is understood that the controller 7 can be held similarly by the player's left hand. With the controller 7 being held in one hand of the player, the player can easily press down the control section 72.

When the player presses the control button 72d with the thumb as shown in FIG. 8B, the controller 7 sways in the up-down direction as shown in FIG. 9, because the controller 7 is only held by a hand. FIG. 9 shows the controller 7 as viewed from the side, wherein the broken line shows the controller 7 before the button is pressed down, and the solid line shows the controller 7 being swayed by the press-down operation. As the player presses down the control button 72d harder, the sway angle $\theta$ and the sway velocity of the sway movement in the up-down direction tend to increase. As the housing 71 of the controller 7 as a whole sways down, the tip portion of the housing 71 moves down. Therefore, in view of the downward component, the sway motion is seen as a change in the y-axis acceleration component detected by the acceleration sensor 701. Where the motion sensor is a gyro sensor, the sway of the tip portion is seen as an angular velocity (the sway angle $\theta$). The magnitude of the sway of the controller 7 increases as the control button 72d is pressed harder, and it is therefore seen as an analog value from the acceleration sensor 701 or the gyro sensor.

It is possible to estimate the press-down load by calculating, for example, the change of the values of the motion sensor (the acceleration sensor 701 or the gyro sensor), which have been stored in the memory before the control button 72 is pressed down, the value of the motion sensor at the press-down operation, the change of the values of the motion sensor to be stored after the press-down operation, the change of the values of the motion sensor before and after the press-down operation, etc.

The controller 7 is held in one hand in the present embodiment. However, even when the controller 7 is held with two hands in a lateral position, the housing 71 sways similarly according to how hard the control button 72 is pressed, and the acceleration sensor 701 or the gyro sensor outputs a value according to the press-down load. Where the controller 7 is operated while being placed on a desk, the sway is smaller than when the controller 7 is held in a hand. However, an analog value is still obtained because the press-down impact on the control button 72 reaches the housing 71. In the example of FIG. 9, the change in the value of the motion sensor is used, which occurs as the housing 71 moves down when the control button 72 is pressed down. Alternatively, by using the values of the motion sensor at, before and after the press-down operation, it is possible to detect the press-down magnitude in analog values based on the motion of the housing 71 moving back up after moving down, or based on the changes of the value due to vibration components in the housing 71 being jerked in the press-down direction (e.g., the up-down direction), which occurs when the control button 72 is pressed down hard.

The player can perform an operation using information from the image capturing/processing section 74 by holding the controller 7 with the front side of the controller 7 (the side for receiving light to be sensed by the image capturing/processing section 74) facing toward the display screen of the monitor 2. For example, with the player's thumb on the upper surface of the controller 7 and the index finger in the depressed portion on the lower surface of the controller 7, the light-receiving port of the image capturing/processing section 74 provided on the front side of the controller 7 is exposed in the front direction of the player. The two markers 8L and 8R are provided around the display screen of the monitor 2. The markers 8L and 8R output infrared light to the front side of the monitor 2, and serve as imaging targets to be captured by the image capturing/processing section 74. The markers 8L and 8R may be integral with the monitor 2, or provided separately from the monitor 2 and placed around the monitor 2 (on top of or under the monitor 2).

With the controller 7 being held in one hand of the player, the light receiving port of the image capturing/processing section 74 provided on the front side of the controller 7 is exposed, whereby infrared light from the two markers 8L and 8R can easily be received through the light receiving port. In other words, the player can hold the controller 7 in one hand without blocking any function of the image capturing/processing section 74. Since the controller 7 has an elongated shape with the light-receiving port of the image capturing/processing section 74 being provided on the front surface at one end of the controller 7 in the longitudinal direction, the controller 7 is suitable for operations such as an operation where the player points at a position on the screen with the controller 7 using the image capturing/processing section 74.

As shown in FIG. 10, the markers 8L and 8R each have a viewing angle $\theta 1$. The image sensing device 743 has a viewing angle $\theta 2$. For example, the viewing angle $\theta 1$ of each of the markers 8L and 8R is 34° (half angle), and the viewing angle $\theta 2$ of the image sensing device 743 is 41°. When the markers 8L and 8R are both present within the viewing angle $\theta 2$ of the image sensing device 743 and when the image sensing device 743 is present within the viewing angle $\theta 1$ of the marker 8L and within the viewing angle $\theta 1$ of the marker 8R, the video game device main unit 5 calculates the position of the controller 7 by using the position data of the high-luminance points of the two markers 8L and 8R.

As the player holds the controller 7 so that the front surface thereof faces the monitor 2, the image capturing/processing section 74 receives infrared light outputted from the two markers 8L and 8R. Then, the image sensing device 743 captures the incident infrared light via the infrared filter 741 and the lens 742, and the image processing circuit 744 processes the captured image. The image capturing/processing section 74 detects the infrared light component outputted from the markers 8L and 8R, thereby obtaining the positions of the markers 8L and 8R (the position of the target image) in the captured image or the size information thereof, such as the area, diameter and width. Specifically, the image processing circuit 744 analyzes the image data captured by the image sensing device 743 to first exclude, from the area information, images that cannot possibly be the infrared light from the markers 8L and 8R, and then identify high-luminance points to be the positions of the markers 8L and 8R. Then, the image capturing/processing section 74 obtains position information, e.g., the centroid, of the identified bright spots, and outputs the obtained position information as the process result data. The position information, being the process result data, may be coordinate values with respect to a predetermined reference point in the captured image (e.g. , the center or the upper left corner of the captured image) being the origin, or may alternatively be a vector representing the difference between the current bright spot position and a reference point being the bright spot position at a predetermined point in time. Thus, the position information of the target image is a parameter used as the difference with respect to a predetermined reference point, which is defined in the captured image captured by the image sensing device 743. As the position information is transmitted to the video game device main unit 5, the video game device main unit 5 can obtain, based on the difference between the position information and the reference, the amount of change in the signal according to the movement, the orientation, the position, etc., of the image capturing/processing section 74, i.e., the controller 7, with respect to the markers 8L and 8R. Specifically, as the controller 7 is moved around, the positions of the high-luminance points in the image transmitted from the communications section 75 change. Therefore, by making a direction input or a position input according to the change in the positions of the high-luminance points, it is possible to make a direction input or a position input to a three-dimensional space according to the direction in which the controller 7 is moved. In a process example to be described later, the image capturing/processing section 74 obtains the centroid position for each of the target images of the markers 8L and 8R in the captured image, and outputs the obtained centroid position as the process result data.

Thus, the image capturing/processing section 74 of the controller 7 captures the image of fixed markers (infrared light from the two markers 8L and 8R in the present embodiment), whereby it is possible to make a control input according to the movement, the orientation, the position, etc., of the controller 7 by processing data outputted from the controller 7 in the process performed by the video game device main unit 5, thus realizing an intuitive control input, different from those using control buttons and control keys where the player presses the buttons or the keys. Since the markers 8L and 8R are provided around the display screen of the monitor 2, a position with respect to the markers 8L and 8R can easily be converted to the movement, the orientation, the position, etc. , of the controller 7 with respect to the display screen of the monitor 2. Thus, the process result data based on the movement, the orientation, the position, etc., of the controller 7 can be used as a control input that is directly reflected on the display screen of the monitor 2. For example, the position on the display screen pointed at by the controller 7 can be calculated. Therefore, as the player moves the hand holding the controller 7 with respect to the display screen of the monitor 2, the controller 7 is further provided with a control input function in which the movement of the player's hand is directly reflected on the display screen, and the controller 7 can function as a pointing device capable of outputting data for specifying a position on the display screen.

In an exemplary process realized by the application of the present invention, the volume of a sound reproduced, or the size or motion of an object displayed, is changed according to how hard the control section 72 (e.g., the control button 72d) is pressed down (hereinafter the "press-down load") as shown in FIG. 8B.

For example, when the player presses the control button 72d, a sound (sound effect) is reproduced from the speaker 2a at a volume according to the press-down load, as shown in FIG. 11. The object OBJ is displayed on the display screen of the monitor 2 with a size according to the press-down load with which the control button 72d is pressed by the player.

If the player presses the control button 72d even harder than in FIG. 11, the volume of the sound effect reproduced from the speaker 2a increases according to the press-down load as shown in FIG. 12. The size of the object OBJ displayed on the display screen of the monitor 2 also increases according to the press-down load with which the control button 72d is pressed by the player.

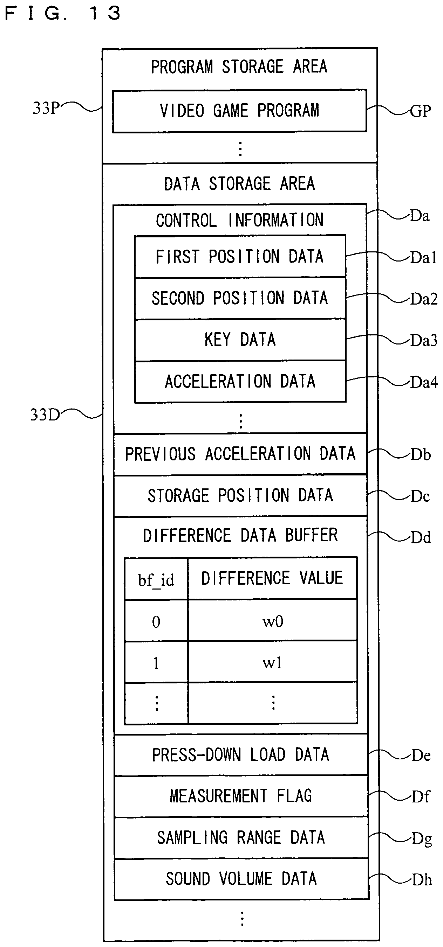

The details of the process performed by the video game system 1 will now be described. First, important data to be used in the process will be described with reference to FIG. 13. FIG. 13 shows an example of the video game program and data to be stored in the main memory 33 of the video game device main unit 5 in a case where the sound volume is varied according to the press-down load.

Referring to FIG. 13, the main memory 33 includes a program storage area 33P and a data storage area 33D. The program storage area 33P stores a video game program GP, etc. The data storage area 33D stores control information Da, previous acceleration data Db, storage position data Dc, a difference data buffer Dd, press-down load data De, a measurement flag Df, sampling range data Dg, sound volume data Dh, etc. In addition to those shown in FIG. 13, the main memory 33 also stores other data necessary for the game process, such as other data of objects and characters to be present in the video game according to the type of process to be performed.

The video game program GP is a program that the CPU 30 loads from the optical disc 4 as necessary, and is a program that defines the entire process (steps 51 to 87 to be described later). Upon executing the video game program GP, the game process is started.

The control information Da is a series of control information transmitted from the controller 7 as transmit data, and is updated to the latest control information. The control information Da includes first position data Da1 and second position data Da2, corresponding to the process result data described above. The first position data Da1 represents the position (coordinates) of the image of one of the two markers 8L and 8R in the captured image captured by the image sensing device 743. The second position data Da2 represents the position (coordinates) of the image of the other marker in the captured image. For example, the position of the image of a marker is represented by a set of coordinates in an XY coordinate system of the captured image. The present invention is also applicable to a device not capable of obtaining the first position data Da1 and the second position data Da2. An embodiment where these data are not used will be described later with reference to a flow chart.

In addition to the position data (the first position data Da1 and the second position data Da2) being an example of the process result data obtained from the captured image, the control information Da includes key data Da3 obtained from the control section 72, acceleration data Da4 obtained from the acceleration sensor 701, etc. Acceleration data Da includes x-axis direction acceleration data ax, y-axis direction acceleration data ay and z-axis direction acceleration data az, which are detected by the acceleration sensor 701 separately for the x-, y- and z-axis components. The communications unit 6 provided in the video game device main unit 5 receives the control information Da transmitted from the controller 7 at a regular interval (e.g., 5 ms), and the received data are stored in a buffer (not shown) of the communications unit 6. The stored data is read out in a cycle of one frame (1/60 second), being the game process interval, and the control information Da in the main memory 33 is updated. In the present embodiment, the acceleration data Da4 is read out and updated in a cycle (e. g., about 1/20 second) shorter than one frame being the game process interval. Then, the difference value obtained by using the updated acceleration data Da4 is stored in the main memory 33 (the difference data buffer Dd).

The previous acceleration data Db is the acceleration data (x-axis direction acceleration data bx, y-axis direction acceleration data by, and z-axis direction acceleration data bz), which were obtained in the previous iteration of the cycle of calculating the difference value. The storage position data Dc represents a storage position bf_id, being the position in the difference data buffer Dd where the difference value w is stored. The difference data buffer Dd is a storage area for successively storing the difference value w of the magnitude of the acceleration vector obtained from the acceleration data Da4 and the previous acceleration data Db in a specified storage position bf_id. The number of buffers for the difference value w stored in the difference data buffer Dd is bf_MAX, and the difference values w0 to w(bf_MAX-1) are stored in the storage positions 0 to bf_MAX-1, respectively. It is preferred that the number of buffers bf_MAX is set to be larger than the number of data (e. g. , larger than the constant M to be described later) to be referred to in the button information reading process to be described later. The press-down load data De represents a press-down load pwr with which the control section 72 is pressed by the player. The measurement flag Df represents a measurement flag fg, which indicates whether or not the press-down load is being measured. The sampling range data Dg represents the data range (the storage positions id_now to id_end) to be used for calculating the press-down load pwr from the difference value w stored in the difference data buffer Dd. The sound volume data Dh represents the sound volume calculated from the press-down load pwr.

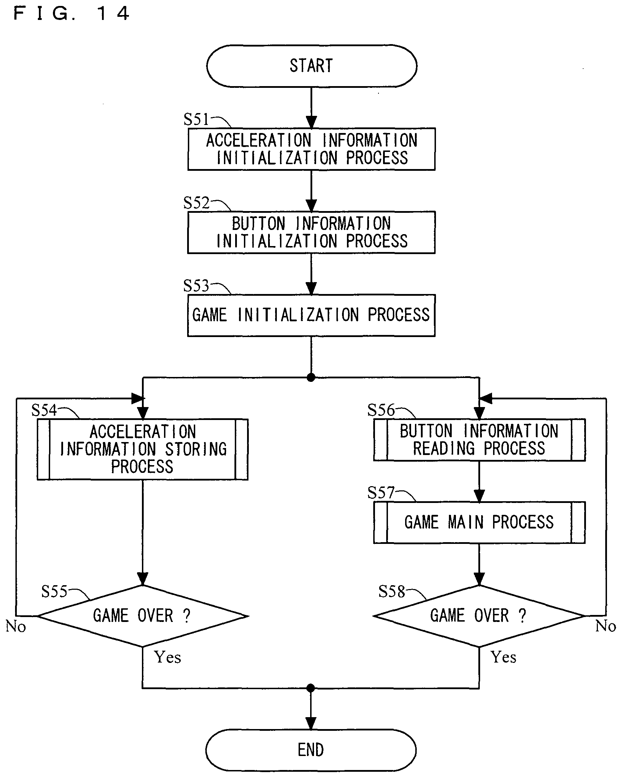

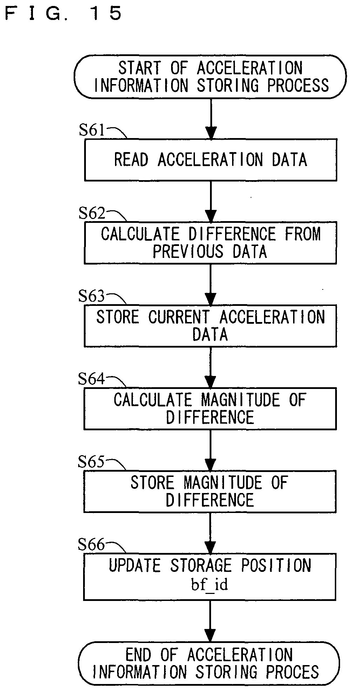

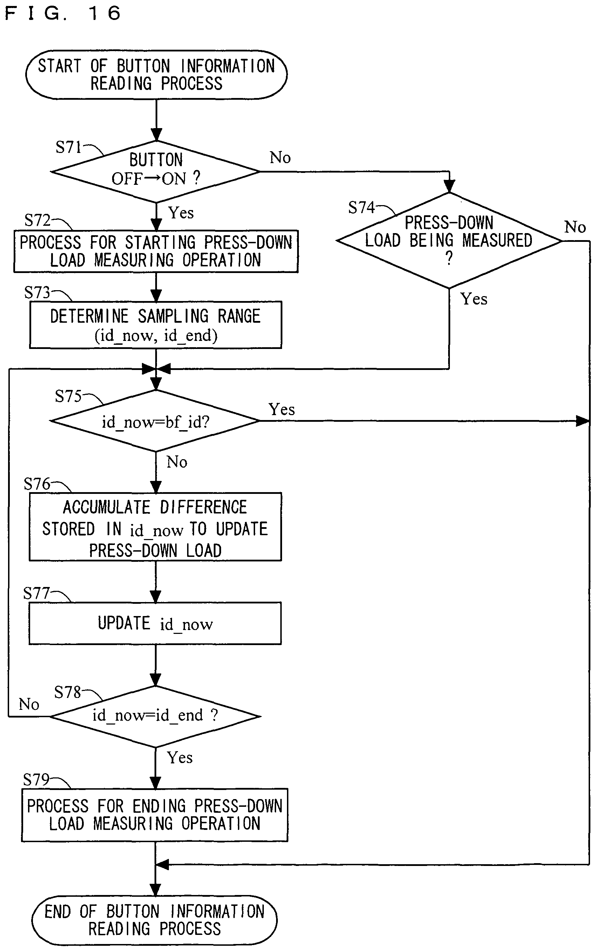

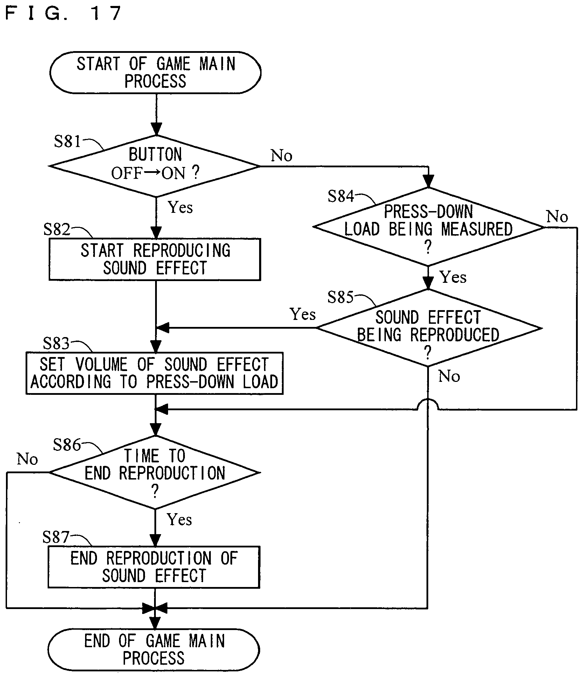

Referring now to FIGs. 14 to 17, the details of the process performed by the video game device main unit 5 will be described. FIG. 14 is a flow chart showing the game process performed by the video game device main unit 5. FIG. 15 shows, in detail, a subroutine of step 54 in FIG. 14 for the acceleration information storing process. FIG. 16 shows, in detail, a subroutine of step 56 in FIG. 14 for the button information reading process. FIG. 17 shows, in detail, a subroutine of step 57 in FIG. 14 for the game main process. In the flow charts of FIGs. 14 to 17, other processes that are not directly related to the present invention are not described in detail. In FIGs. 14 to 17, each step performed by the CPU 30 is denoted by an abbreviation "S" plus the step number.

When the power of the video game device main unit 5 is turned ON, the CPU 30 of the video game device main unit 5 executes a boot program stored in a boot ROM (not shown), thus initializing various units such as the main memory 33. The video game program stored in the optical disc 4 is loaded to the main memory 33, and the CPU 30 starts executing the video game program. The flow chart of FIG. 14 shows the process performed after the completion of the process described above.

Referring to FIG. 14, the CPU 30 performs initializations for the game process (steps 51 to 53), and the process proceeds to the next step.

For example, the CPU 30 initializes the acceleration information stored in the data storage area 33D (step 51). The acceleration information corresponds to the previous acceleration data Db, the storage position data Dc, the difference data buffer Dd, the sampling range data Dg, etc. Specifically, the CPU 30 sets all of the x-axis direction acceleration data bx, the y-axis direction acceleration data by and the z-axis direction acceleration data bz stored in the previous acceleration data Db to 0, i.e., (bx,by,bz)=(0,0,0). Moreover, the CPU 30 initializes the storage position stored as the storage position data Dc to bf_id=0. The CPU 30 also initializes all the difference values w stored in the difference data buffer Dd to 0. Furthermore, the CPU 30 initializes the storage positions id_now and id_end stored in the sampling range data Dg both to 0.

The CPU 30 also initializes the button information stored in the data storage area 33D (step 52). The button information corresponds to the press-down load data De, the measurement flag Df, etc. For example, the CPU 30 initializes the press-down load pwr stored in the press-down load data De to 0. Moreover, the CPU 30 initializes the measurement flag fg stored in the measurement flag Df to 0.

Furthermore, the CPU 30 initializes the game information stored in the data storage area 33D (step 53). The game information corresponds to the sound volume data Dh, etc., and also includes other parameters to be used in the game process. For example, the CPU 30 initializes the sound volume represented by the sound volume data Dh to a predetermined minimum volume value.

Then, the CPU 30 repeats step 54 and steps 56 and 57 in parallel threads until the game is over (Yes in steps 55 and 58) . For example, step 54 is repeated about three times faster than steps 56 and 57.

In step 54, the CPU 30 performs the acceleration information storing process. Then, if the game is to continue (No in step 55), the CPU 30 repeats step 54. Referring now to FIG. 15, the acceleration information storing process performed in step 54 will be described.

Referring to FIG. 15, the CPU 30 reads out the acceleration data Da4 (step 61), and the process proceeds to the next step. Specifically, the CPU 30 reads out the x-axis direction acceleration data ax, the y-axis direction acceleration data ay and the z-axis direction acceleration data az stored as the acceleration data Da4 in the data storage area 33D.

Then, the CPU 30 calculates the difference between the acceleration data and the previous acceleration data (step 62), and the process proceeds to the next step. Specifically, the CPU 30 reads out the x-axis direction acceleration data bx, the y-axis direction acceleration data by and the z-axis direction acceleration data bz stored as the previous acceleration data Db in the data storage area 33D. Then, using the acceleration data ax, ay and az obtained in step 61, the CPU 30 calculates the x-axis direction acceleration data difference vx=ax-bx, the y-axis direction acceleration data difference vy=ay-by, and the z-axis direction acceleration data difference vz=az-bz.

Then, the CPU 30 stores the acceleration data ax, ay and az obtained in step 61 as the previous acceleration data Db (step 63), and the process proceeds to the next step. Specifically, the CPU 30 stores the x-axis direction acceleration data ax as the x-axis direction acceleration data bx, the y-axis direction acceleration data ay as the y-axis direction acceleration data by, and the z-axis direction acceleration data az as the z-axis direction acceleration data bz, thus updating the previous acceleration data Db.

Then, the CPU 30 obtains the magnitude of the difference calculated in step 62 (the difference value w) (step 64), and the process proceeds to the next step. For example, the CPU 30 calculates the difference value w as follows:

$$w = \sqrt{v_x{}^2 + v_y{}^2 + v_z{}^2}$$

Then, the CPU 30 stores the difference value w obtained in step 64 in the difference data buffer Dd (step 65), and the process proceeds to the next step. For example, the CPU 30 stores the difference value w at the storage position bf_id as indicated by the current storage position data Dc.

Then, the CPU 30 updates the storage position bf_id indicated by the storage position data Dc (step 66), and exits the subroutine. For example, the CPU 30 calculates the new storage position bf_id as follows:

$$\texttt{bf\_id} \leftarrow \texttt{(bf\_id+1)\%bf\_MAX}$$

where "A%B" denotes the remainder of A/B, and bf_MAX denotes the number of buffers of the difference data buffer Dd.

Referring back to FIG. 14, in steps 56 and 57, the CPU 30 performs the button information process and the game main process, respectively. If the game is to continue (No in step 58), the CPU 30 repeats steps 56 and 57. Referring now to FIGs. 16 and 17, the button information process and the game main process performed in steps 56 and 57 will be described.

Referring to FIG. 16, the CPU 30 refers to the key data Da3 to determine whether or not the control section 72 for which the press-down load is measured (e.g., the control button 72d) has transitioned from OFF to ON, i.e., whether or not it is the moment at which the state of the control section 72 transitions from "not pressed" to "pressed" (step 71). Then, if the control section 72 for which the press-down load is measured has transitioned from OFF to ON, the process proceeds to step 72. If the control section 72 for which the press-down load is measured has not transitioned from OFF to ON, the process proceeds to step 74.

In step 72, the CPU 30 performs a process for starting the press-down load measuring operation. For example, the CPU 30 sets the measurement flag fg to 1, updates the measurement flag Df, sets the press-down load pwr to 0, and updates the press-down load data De. Then, the CPU 30 determines the sampling range to be employed based on the difference value w stored in the difference data buffer Dd (step 73), and the process proceeds to step 75. For example, the CPU 30 samples the difference values w stored in the series of storage positions bf_id from id_now to id_end. For example, the storage positions id_now and id_end can be obtained as follows:

$$bf\_now \leftarrow (bf\_id-M)\%bf\_MAX$$

$$bf\_end \leftarrow (bf\_id+N)\%bf\_MAX$$

where M and N are constants, and bf_id is the value of the storage position bf_id currently stored in the storage position data Dc. As will be apparent from the description below, the CPU 30 employs, for the measurement of the press-down load, a series of difference values w from the value obtained M iterations before the current storage position bf_id to the value to be obtained N iterations after the storage position bf_id. Thus, the CPU 30 employs a series of difference values w obtained before and after when the control section 72 for which the press-down load is measured, which means that the CPU 30 uses acceleration data representing the acceleration occurring in the assembly of the controller 7 before and after the press-down operation.

In step 74, the CPU 30 refers to the measurement flag Df to determine whether or not the press-down load is being measured. If the press-down load is being measured (fg=1), the process proceeds to step 75. If the press-down load is not being measured (fg=0), the CPU 30 exits the subroutine.

In step 75, the CPU 30 determines whether or not the storage position bf_now determined in step 73 is the same as the storage position bf_id being currently stored in the storage position data Dc. If bf_now#bf_id, the process proceeds to step 76. If bf_now=bf_id, the CPU 30 exits the subroutine. This is for the following reason. When bf_now=bf_id, the position where the next difference value w is to be stored in the acceleration information storing process of step 54 is the storage position bf_now, and the employment of the difference value w stored in such a storage position should be avoided.

In step 76, the CPU 30 refers to the press-down load pwr stored in the press-down load data De and the difference value w stored in the storage position id_now to cumulatively add the difference value w to the press-down load pwr to thereby calculate the new press-down load pwr, and updates the press-down load data De. For example, the CPU 30 calculates the new press-down load pwr as follows:

$$pwr \leftarrow pwr + w$$

Then, the CPU 30 updates the storage position id_now (step 77), and the process proceeds to the next step. For example, the CPU 30 calculates the new storage position id_now as follows:

$$id\_now \leftarrow (id\_now+1)\%bf\_MAX$$

Then, the CPU 30 determines whether or not the storage position id_now updated in step 77 is the same as the storage position bf_end determined in step 73. Then, if bf_now=bf_end, the CPU 30 determines that the series of difference values w over the sampling range have all been accumulated, and the process proceeds to step 79. If bf_now≠bf_end, the CPU 30 returns to step 75 to repeat the process.

In step 79, the CPU 30 performs a process for ending the press-down load measuring operation, and exits the subroutine. For example, the CPU 30 sets the measurement flag fg to 0, and updates the measurement flag Df.

In FIG. 17, the CPU 30 refers to the key data Da3 to determine whether or not the control section 72 for which the press-down load is measured has transitioned from OFF to ON, i.e., whether or not it is the moment at which the state of the control section 72 transitions from "not pressed" to "pressed" (step 81). Then, if the control section 72 for which the press-down load is measured has transitioned from OFF to ON, the process proceeds to step 82. If the control section 72 for which the press-down load is measured has not transitioned from OFF to ON, the process proceeds to step 84.

In step 82, the CPU 30 starts reproducing a sound effect in response to the pressing of the control section 72 for which the press-down load is measured. The CPU 30 sets the sound volume of the sound effect according to the press-down load pwr to update the sound volume data Dh and reproduces the sound effect from the speaker 2a at the sound volume (step 83), and the process proceeds to step 86. For example, the CPU 30 sets the sound volume of the sound effect by multiplying the current press-down load pwr by a predetermined constant.

In step 84, the CPU 30 refers to the measurement flag Df to determine whether or not the press-down load is being measured. Then, if the press-down load is being measured (fg=1), the CPU 30 determines whether or not a sound effect is being reproduced (step 85). If the press-down load is being measured and a sound effect is being reproduced (Yes in both steps 84 and 85), the process proceeds to step 83. Thus, after the reproduction of a sound effect has started, the sound volume of the sound effect is varied according to the accumulating press-down load pwr. If the press-down load is being measured but a sound effect is not being reproduced (Yes in step 84, No in step 85), the CPU 30 exits the subroutine. If the press-down load is not being measured (No in step 84), the process proceeds to step 86.

In step 86, the CPU 30 determines whether or not it is time to end the reproduction of the sound effect. For example, the time to end the reproduction of the sound effect may be a point in time when the control section 72 for which the press-down load is measured transitions from ON to OFF, a predetermined amount of time after the ON-to-OFF transition, a predetermined amount of time after the control section 72 transitioned from OFF to ON, etc. If it is not time to end the reproduction of the sound effect (including the case where a sound effect is not being reproduced), the CPU 30 exits the subroutine. If it is time to end the reproduction of the sound effect, the CPU 30 ends the reproduction of the sound effect (step 87), and exits the subroutine.

Thus, with the operation shown in the flow charts discussed above, how hard a control button is pressed can be reflected in the game, without providing a detector element for each control button. For example, an analog value of the load applied on a control button can be calculated by using the acceleration data from the acceleration sensor provided in the controller 7, and a sound effect can be produced at a sound volume according to the calculation result.

With the operation shown in the flow charts discussed above, the CPU 30 starts calculating the press-down load by accumulating the acceleration data differences occurring before and after the OFF-to-ON transition of the control button, the operation being triggered by the OFF-to-ON transition. By accumulating the acceleration data differences, it is possible to eliminate the influence of the gravitational acceleration being constantly detected by the acceleration sensor 701, and to calculate a press-down load being equivalent to the operation energy used for pressing the control button. Thus, the present system is sensitive even to an operation of quickly pressing down a control button.

With the acceleration data differences occurring before the trigger event, it is possible to calculate the press-down load during the player's stroke of pushing in the control button ("pre-button-down load"). With the acceleration data differences occurring after the trigger event, it is possible to calculate the impact imparted on the assembly of the controller 7 by the player pushing in the control button ("post-button-down load"). If any of the pre-button-down load, the post-button-down load, etc., does not need to be calculated, the press-down load may be calculated by setting a sampling period for only one of these periods. For example, if the control section for which the press-down load is measured is a type of a button that is triggered by a short press-down stroke (e.g., a touch panel that transitions from OFF to ON at the instance it is touched), it is not necessary to calculate the pre-button-down load. In this case, the press-down load is calculated by accumulating the acceleration data differences, which are obtained before a predetermined amount of time elapses since the trigger event. Specifically, a sampling period can be set for only one of the periods as follows. A sampling period can be set as being only a predetermined period after the OFF-to-ON transition by setting the constant M to 0, and a sampling period can be set as being only a predetermined period before the OFF-to-ON transition by setting the constant N to 0.

If the game process does not require a high precision for the press-down load, it is not necessary to accumulate the acceleration data differences over the entire sampling period. For example, the press-down load may be calculated by using the acceleration data difference occurring at the trigger event and that occurring at another point in time. Such a calculation can be realized by properly adjusting the constants M and N. Alternatively, the press-down load may be calculated by using the absolute value of the acceleration data occurring at the trigger event. Thus, without calculating the acceleration data differences or accumulating the differences, it is possible to calculate the press-down load by using the acceleration data difference between two points in time or by using the absolute value of the acceleration data occurring at a certain point in time.

While the press-down load is measured for a particular control section 72 (the control button 72d) in the present embodiment, the press-down load for any other control section 72 may also be measured in the present invention since the measurement is done by using acceleration data from the acceleration sensor 701, which generates motion data according to the movement of the assembly of the controller 7. It is understood that the press-down load may be measured for a plurality of control sections 72. Thus, the present invention is capable of performing an analog detection of the load applied on each of the control sections 72 provided on the controller 7. It is not necessary to provide a special device for each control section 72, and the analog detection can be realized by only one acceleration sensor 701, thus giving a significant cost advantage.

The acceleration sensor 701 provided in the controller 7 is a 3-axis acceleration sensor capable of separately detecting and outputting three axis components for three axes perpendicular to one another. The present invention can also be realized by using an acceleration sensor capable of separately detecting at least two axis components for two axes perpendicular to each other, or an acceleration sensor capable of detecting only one axis component. For example, if the controller 7 is provided with an acceleration sensor capable of detecting a component in the stroke direction of at least a control button whose press-down load is measured, the press-down load of the control button can similarly be calculated by using the acceleration data obtained from the acceleration sensor.

A gyro sensor may be used instead of the acceleration sensor 701 provided in the controller 7. It is possible to calculate the press-down load by using an output signal obtained from a gyro sensor in a manner similar to the case where the acceleration data from the acceleration sensor 701 is used. Since the gyro sensor is capable of directly detecting the rotation (or the angular velocity) of the gyro element about its axis, it is possible to calculate the press-down load by accumulating the absolute values without obtaining the difference between the obtained rotation values or angular velocity values.

In the above description, the system calculates, and uses for the process, the press-down load of the control section 72, which is capable of receiving a digital input and turned ON/OFF by being pressed. Alternatively, the system may measure the press-down load for a control button used for making an analog input, as does the system described above in the Background Art section. In such a case, it is possible to obtain two different analog inputs, i.e., the output signal from the analog input receiving function provided for the control button, and the press-down load calculated by using the output from the acceleration sensor, etc. Since the former analog input, i.e., the calculation of the press-down load, is sensitive for an operation of quickly pressing down the control, to which the latter analog input is insensitive, for example, it is possible to determine the press-down load while compensating for the detection characteristics of each other.

With the operation shown in the flow charts discussed above, the sound volume of the sound effect is varied according to the press-down load. Alternatively, the sound quality of the sound effect may be varied according to the press-down load. Other sound effect parameters may be varied according to the press-down load, e.g., the pitch of the sound effect or the interval between repeated iterations of the sound effect. The present invention can be applied to a music video game where the player scores based on the evaluation of the sound volume of the reproduced sound effect. For example, there is provided evaluation data indicating a point in time at which a button should be operated and an appropriate sound volume for the point in time, and the point in time and the sound volume are indicated to the player. Then, the point in time at which the player operates the button and the sound volume at the point in time are compared with the evaluation data to determine an evaluation value for the player's operation. Thus, a music video game is realized. For example, this is suitable for a music video game where the player tries to hit a percussion instrument, such as a drum, at a specified time with a specified strength as precisely as possible.

Where the size of the object OBJ displayed on the monitor 2 is also varied according to the press-down load as described above with reference to FIGs. 11 and 12, the size of the object OBJ to be displayed can be set and the object OBJ can be displayed on the monitor 2 with that size, at the same time with the process of setting the sound volume of the sound effect (step 83). Only the size of the object OBJ displayed on the monitor 2 may be varied according to the press-down load, without varying the sound volume of the sound effect according to the press-down load.

While the above description is directed to a case where the sound volume or the size of a displayed object is varied according to the press-down load, other game processes can be performed according to the press-down load. It is understood that other parameters that can be varied according to the press-down load include the moving speed of the player object moving across the game world, the moving speed of other objects thrown or shot by the player object (e.g., a weapon object such as a bullet, a cannonball or a spear, or a ball object), and the amount of damage to be imparted on an enemy object (e.g., the destructive power). Alternatively, the height to which the player object can jump in the game world can be varied by varying the gravitational acceleration acting in the game world, or the jumping ability of the player character, according to the press-down load. Other video games can be provided that utilize the function of obtaining the press-down load while using the first position data Da1 and the second position data Da2, which can be obtained from the controller 7.

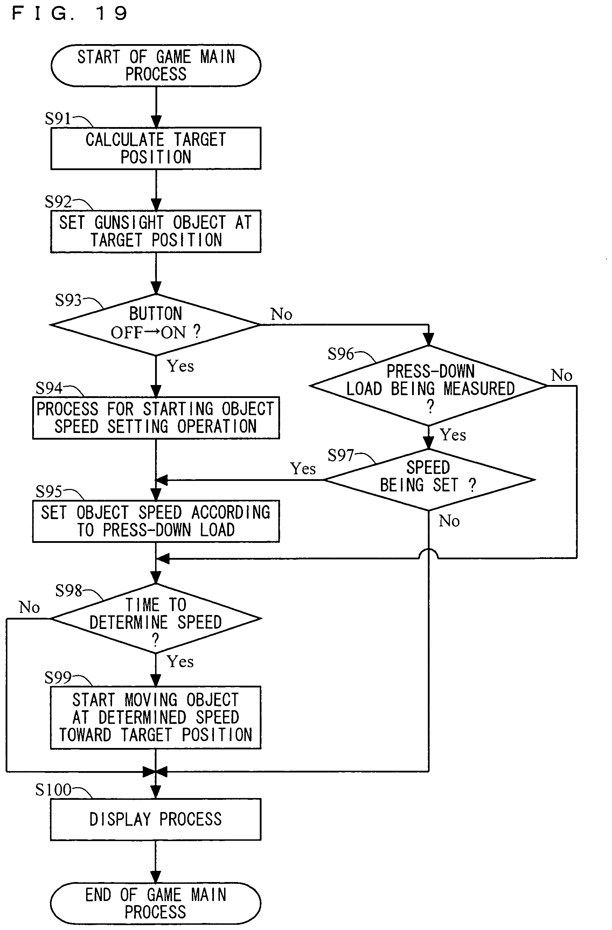

Referring to FIGs. 18 and 19, a game process performed in view of the press-down load while using the first position data Da1 and the second position data Da2 will be described. FIG. 18 shows a game image where the game process is performed according to the press-down load, using the first position data Da1 and the second position data Da2. FIG. 19 shows, in detail, another subroutine of step 57 of FIG. 14 for the game main process.

Referring to FIG. 18, the display screen of the monitor 2 is displaying a game space with an enemy object E. As described above, the process result data (the first position data Da1 and the second position data Da2) based on the movement, the orientation, the position, etc., of the controller 7 can be used as a control input that is directly reflected on the display screen of the monitor 2. For example, the position on the display screen pointed at by the controller 7 can be calculated. In the game image shown in FIG. 18, a gunsight object TG is displayed at the target position in the game space, which corresponds to the position on the display screen of the monitor 2 being pointed at by the player with the controller 7.

When the player presses down the control button 72d of the controller 7, the bullet object OBJ representing a bullet, etc., is shot from a predetermined position in the game space (e.g., the position at which the player character is located) toward the gunsight object TG. The speed v at which the bullet object OBJ travels through the game space varies according to the press-down load with which the control button 72d is pressed down by the player. For example, as the player presses down the control button 72d harder, the moving speed v of the bullet object OBJ increases, and the damage on the enemy object E hit by the bullet object OBJ increases. However, if the player presses down the control button 72d hard, the housing 71 of the controller 7 will be jerked substantially. This will also jerk the position on the display screen of the monitor 2 pointed at by the controller 7, thus shifting the position of the gunsight object TG. Thus, while the player can shoot a fast and damaging bullet object OBJ by pressing down the control button 72d hard, it will then become more difficult to control the position the bullet object OBJ will reach, thus improving the playability of the game.

This can be applied to a sports video game, or the like, where the player controls a ball. For example, where the present invention is applied to a baseball video game, in which the player, controlling the pitcher, presses down the control button 72d to pitch a ball to the catcher, the player can throw a fast ball by pressing down the control button 72d hard, but it will then be more difficult to control the ball.

The details of the game process performed based on the first position data Da1, the second position data Da2 and the press-down load will now be described. A game process in which the moving speed of an object is varied according to the press-down load will be described as a specific example of the present invention. The main flow of the game process is similar to that shown in the flow chart of FIG. 14. In the game process, the acceleration information storing process and the button information reading process are similar to the subroutines in FIGs. 15 and 16. Therefore, these processes will not be further described below, and the game main process in the game process will now be described with reference to FIG. 19.

Referring to FIG. 19, the CPU 30 refers to the first position data Da1 and the second position data Da2 to calculate the target position in the game world (step 91). Then, the CPU 30 places the gunsight object TG at the calculated target position (step 92), and the process proceeds to the next step. An exemplary method for calculating the target position based on the first position data Da1 and the second position data Da2 received from the controller 7 will now be described.

The first position data Da1 and the second position data Da2 are position data each representing a position in the captured image of the markers 8L and 8R, and are transmitted from the communications section 75 of the controller 7 to the video game device main unit 5 at a predetermined interval (e. g. , 5ms). Then, the CPU 30 uses the position data for each frame.

In step 91, the CPU 30 calculates middle point position data representing the middle point between the first position data Da1 and the second position data Da2, and direction data representing the direction from the first position data Da1 to the second position data Da2 (e.g., a vector originating from the position of the first position data Da1 and ending at the position of the second position data Da2). The middle point data is a parameter representing the position of the target image (the markers 8L and 8R) in the captured image. Therefore, based on the difference between the middle point data and a predetermined reference position, it is possible to calculate the change in the image position according to the change in the position of the controller 7.

The positional relationship between the markers 8L and 8R, the display screen of the monitor 2 and the controller 7 will now be discussed. For example, assume a case where the two markers 8L and 8R are installed on the upper surface of the monitor 2 (see FIG. 18), and the player points at the center of the display screen of the monitor 2 using the controller 7 whose upper surface is facing up (where the center of the display screen is being at the center of the image captured by the image capturing/processing section 74). Then, in the image captured by the image capturing/processing section 74, the middle point of the target image (the middle point between the markers 8L and 8R) does not coincide with the pointed position (the center of the display screen). Specifically, the position of the target image in the captured image is shifted upward off the center of the captured image. The reference position is set so that it is considered that the center of the display screen is pointed at when the target image is at such a position. The position of the target image in the captured image moves in response to the movement of the controller 7 (in the opposite direction to that of the movement of the controller 7). Therefore, it is possible to calculate the position on the display screen being pointed at by the controller 7 by performing a process in which the pointed position in the display screen is moved according to the movement of the position of the target image in the captured image. As to the reference position setting, the player may point at a predetermined position on the display screen so that the position of the target image at that time is stored while being associated with the predetermined position. Alternatively, the reference position may be a predetermined position if the positional relationship between the target image and the display screen is fixed. Where the markers 8L and 8R are provided separately from the monitor 2 and placed around the monitor 2 (on top of or under the monitor 2), the player may be prompted to input the position of the markers 8L and 8R with respect to the monitor (e.g. , the player may choose from among a list of possible positions with respect to the monitor 2, e.g. , on top of or under the monitor 2), whereby it is possible to choose between the reference position data for when the markers are placed on top of the monitor and the reference position data for when the markers are placed under the monitor, which may be stored in the optical disc 4 or in a non-volatile memory in the video game device main unit 5. A position (coordinates) with respect to the display screen can be calculated by a linear conversion using a function for calculating a position (coordinates) on the display screen of the monitor 2 from the middle point data. The function is for converting the coordinates of the middle point position calculated from a captured image to coordinates representing the position on the display screen being pointed at by the controller 7 when such a captured image is being captured. With this function, it is possible to calculate the pointed position on the display screen from the middle point position.

However, when the player points at the center of the display screen of the monitor 2 with the controller 7 whose upper surface is facing in a direction other than the upward direction (e.g., facing to the right), i.e., when the player points at the center while twisting or tilting the controller 7, the position of the target image in the captured image is shifted in a direction other than the upward direction (e.g., facing to the left). Thus, due to the inclination of the controller 7, the movement direction of the controller 7 does not coincide with that of the position on the display screen being pointed at. In view of this, the middle point data is corrected by using direction data. Specifically, the middle point data is corrected so as to represent a middle point position that would result if the upper surface of the controller 7 were facing upward. More specifically, in the process of setting the reference position, reference direction data is also set, whereby the calculated middle point data is corrected by rotating the position (coordinates) represented by the middle point data about the center of the captured image by an amount corresponding to the angular difference between the direction data and the reference direction. Then, the pointed position on the display screen is calculated as described above using the corrected middle point data.

Then, the CPU 30 further converts the calculated pointed position on the display screen to a corresponding position in the game world to calculate the coordinates of the target position. The position in the game world corresponding to the pointed position as used herein refers to, for example, a position in the game world displayed while overlapping the pointed position on the display screen of the monitor 2 (e.g., a position obtained by perspective projection).

The fundamental principle of the calculation of the pointed position on the display screen is to determine the position by calculating the displacement of the two-dimensional coordinates of the pointed position from a predetermined reference position, which occurs due to the change in the position of the target image caused by the movement of the controller 7. Therefore, the pointed position coordinates on the display screen can be widely used as other types of two-dimensional coordinates. For example, the pointed position coordinates can be used directly as the x and y coordinates in the world coordinate system. In such a case, a calculation process can be performed for associating the movement of the target image with the movement of the x and y coordinates in the world coordinate system from the reference position, irrespective of the display screen of the monitor 2. In a case where a two-dimensional game image is displayed on the monitor 2, the pointed position coordinates on the display screen can be directly used as the x and y coordinates in the two-dimensional game coordinate system.

Then, the CPU 30 refers to the key data Da3 to determine whether or not the control section 72 for which the press-down load is measured has transitioned from OFF to ON, i.e., whether or not it is the moment at which the state of the control section 72 transitions from "not pressed" to "pressed" (step 93). Then, if the control section 72 for which the press-down load is measured has transitioned from OFF to ON, the process proceeds to step 94. If the control section 72 for which the press-down load is measured has not transitioned from OFF to ON, the process proceeds to step 96.

In step 94, the CPU 30 starts setting the moving speed of the object (e.g., the bullet object OBJ shown in FIG. 18), which moves around in the game world in response to the pressing of the control section 72 for which the press-down load is measured. Then, the CPU 30 sets the moving speed according to the press-down load pwr (step 95), and the process proceeds to step 98. For example, the CPU 30 sets the moving speed of the object by multiplying the current press-down load pwr by a predetermined constant.

In step 96, the CPU 30 refers to the measurement flag Df to determine whether or not the press-down load is being measured. If the press-down load is being measured (fg=1), the CPU 30 determines whether or not the moving speed of the object is being set (step 97). If the press-down load is being measured and the moving speed is being set (Yes in both steps 96 and 97), the process proceeds to step 95. Thus, if the moving speed of the object is being set, the moving speed is updated according to the new press-down load pwr accumulated thereafter. If the press-down load is being measured but the moving speed is not being set (Yes in step 96, No in step 97), the process proceeds to step 100. If the press-down load is not being measured (No in step 96), the process proceeds to step 98.

In step 98, the CPU 30 determines whether or not it is time to determine the moving speed of the object. For example, the time to determine the moving speed may be a point in time when the control section 72 for which the press-down load is measured transitions from ON to OFF, a predetermined amount of time after the ON-to-OFF transition, a predetermined amount of time after the control section 72 transitioned from OFF to ON, etc. If it is not time to determine the moving speed (including the case where the moving speed is not being set), the process proceeds to step 100. If it is time to determine the moving speed, the CPU 30 determines the moving speed of the object as being the moving speed currently set, and the CPU 30 starts moving the object at the determined moving speed toward the target position in the game world calculated in step 91. Then, the process proceeds to step 100.

In step 100, the CPU 30 displays the game image on the display screen of the monitor 2, and exits the subroutine. For example, before the moving speed of the object is determined, i.e., where the moving speed is being set or where the setting of the moving speed has not started and the bullet object OBJ is not present in the game world, the CPU 30 displays, on the monitor 2, the game world with the enemy object E and the gunsight object TG therein. After the moving speed of the object is determined, the CPU 30 displays, on the monitor 2, the bullet object OBJ moving at the determined moving speed toward the gunsight object TG in the game world with the enemy object E and the gunsight object TG therein.

Thus, by using the position pointed at by the controller 7 and the press-down load as control inputs, it is possible to realize a video game utilizing a novel control environment. In the above description, the moving speed of the bullet object OBJ varies according to the press-down load. Alternatively, the attacking power of the bullet object OBJ (e.g., the amount of damage to be imparted on the enemy object E) may be varied according to the press-down load.

In the above description, the input device (pointing device) for outputting data for specifying coordinates corresponding to a position on the display screen employs a configuration for specifying coordinates on the display screen of the monitor 2 by analyzing the image data obtained by capturing an image of the imaging target by the image sensing device 743 provided in the controller 7. With this configuration, two markers being the imaging target are provided around the display screen, wherein a device including the image capturing means and a housing so that the image-capturing direction thereof can be changed freely detects the two markers in the captured image, and the position (coordinates) pointed at by the device is derived based on the positions of the markers in the captured image. However, input devices of other configurations may be employed.

For example, in addition to the electric markers (LED modules) as described above, the imaging target provided around the display screen may be physical markers that reflect light or that have a particular color or a particular shape. Alternatively, the imaging target may be displayed on the display screen of the monitor 2. Alternatively, by reading the scanning lines of the raster scan monitor with image capturing means provided in the controller 7, the monitor itself can be used as the imaging target. Alternatively, a magnetic field generating device may be provided for specifying coordinates by using the magnetic field generated by the magnetic field generating device. In such a case, the controller 7 is provided with a magnetic field sensor for detecting the magnetic field.

While infrared light from the two markers 8L and 8R are used as imaging targets to be captured by the image capturing/processing section 74 of the controller 7 in the above description, any other suitable target may be used as the imaging target. For example, only one marker or three or more markers may be provided around the monitor 2, and the infrared light from these markers may be used as imaging targets to be captured by the image capturing/processing section 74. For example, the present invention can be carried out as described above by providing one marker having a predetermined length around the monitor 2. Alternatively, the display screen of the monitor 2 itself or other light-emitting targets (e.g., lighting in the room) may be used as the imaging target to be captured by the image capturing/processing section 74. Any of various light-emitting targets may be used as the imaging target to be captured by the image capturing/processing section 74, by calculating the position of the controller 7 with respect to the display screen based on the positional relationship between the imaging target and the display screen of the monitor 2.

Alternatively, an imaging target such as a marker may be provided on the controller 7 while providing the image capturing means on the monitor 2. Alternatively, there may be provided a mechanism for radiating light from the front side of the controller 7. In such a case, an image capturing device for capturing an image of the display screen of the monitor 2 is provided separately from the controller 7 and the monitor 2. The image captured by the image capturing device is analyzed so as to determine the position where light radiated from the controller 7 to the display screen of the monitor 2 is reflected, thus similarly realizing an input device capable of outputting data for specifying coordinates on the display screen. Other pointing devices, such as a mouse or a touch panel, may be used as the input device capable of outputting data for specifying coordinates on the display screen.

While the controller 7 and the video game device main unit 5 are connected via wireless communications in the above description, the controller 7 and the video game device main unit 5 may be electrically connected via a cable. In such a case, a cable extending from the controller 7 may be connected to the connection terminal of the video game device main unit 5.

In the above description, the image data captured by the image sensing device 743 is analyzed, whereby the position of infrared light from the markers 8L and 8R, the centroid thereof, etc., are produced in the controller 7 as process result data, and the produced process result data is transmitted to the video game device main unit 5. Alternatively, data at any other suitable process step may be transmitted from the controller 7 to the video game device main unit 5 the video game device 3. For example, the image data captured by the image sensing device 743 may be transmitted from the controller 7 to the video game device main unit 5, wherein the CPU 30 performs the analysis process to obtain the process result data. In such a case, there is no need for the image processing circuit 744 provided in the controller 7. Alternatively, data at a certain point during the process of analyzing the image data may be transmitted from the controller 7 to the video game device main unit 5. For example, data obtained from the image data representing luminance, position, area, etc., may be transmitted from the controller 7 to the video game device main unit 5, wherein the CPU 30 performs the rest of the analysis process to obtain the process result data.

The shape of the controller 7, and the shape, number and arrangement, etc., of the control sections 72 provided on the controller 7, are all illustrative, and it is understood that the present invention can be carried out with any other suitable shape, number and arrangement. The position of the image capturing/processing section 74 in the controller 7 (the light receiving port of the image capturing/processing section 74) does not have to be the front side of the housing 71, but may be on any other side as long as light can be received from outside the housing 71.

The video game device 3 including the information processing device of the present invention has been described in the embodiment above. However, the present invention is not limited to this, as long as the system includes a motion sensor for detecting the movement of the assembly, a plurality of control buttons and an information processing device for performing a process according to the kind of the control button. For example, the present invention can be used with other types of devices such as ordinary personal computers, mobile telephones, PDAs (Personal Digital Assistants), and portable video game devices.

For example, in the case of a mobile telephone including a communications section for wirelessly communicating with another telephone, the housing of the mobile telephone corresponds to the housing of the present invention, and buttons used for making calls, e.g., numeric keys, correspond to the control buttons of the present invention. For example, when a numeric key of the mobile telephone is pressed, a process according to the kind of the numeric key is performed while using the output value of an acceleration sensor, a gyro sensor, etc., provided in the mobile telephone. This is suitable for a video game played on a mobile telephone. The present invention can also be used for typing characters on a mobile telephone, for example, wherein if a key is pressed hard, a character assigned to the key may be displayed with a larger font size or a different color from normal text.

While a video game program is described in the embodiment above, the present invention can be applied to any type of a program for performing a process according to the magnitude of the input applied on a control button.

Note that the video game program of the present invention may be supplied to the video game device main unit 5 via a wired or wireless communications line, instead of via an external storage medium such as the optical disc 4. Alternatively, the video game program may be pre-stored in a non-volatile storage device inside the video game device main unit 5. The information storage medium for storing the video game program is not limited to a non-volatile semiconductor memory, but may alternatively be a CD-ROM, a DVD or any other suitable type of an optical disc medium.

An information processing device and a storage medium storing an information processing program of the present invention are capable of performing an analog detection of the load applied on a control button, and can be used in applications such as information processing devices and information processing programs for performing information processing operations based on button operations.

While the invention has been described in detail, the foregoing description is in all aspects illustrative and not restrictive. It is understood that numerous other modifications and variations can be devised without departing from the scope of the invention.

**Claims**

1. An information processing device (3), comprising a housing (71), a plurality of control buttons (72) provided on a surface of the housing, and button data generation means (751) for, when one of the control buttons is operated, generating control button data (Da3) according to a kind of the control button, wherein the information processing device performs a predetermined information processing operation by using the control button data, the information processing device comprising:

   a motion sensor (701) for generating motion data (Da4) according to movement of the housing;
   data obtaining means (Da) for obtaining the control button data and the motion data;
   data storage means (33D) for storing, as necessary, the motion data obtained by the data obtaining means in a memory (33);
   magnitude calculation means (30, S54) for calculating a magnitude of housing movement representing a press-down load on the control button (pwr) at a point in time when the control button is operated, by accumulating an amount of change in the motion data over a predetermined period of time already stored in the memory upon obtaining the control button data generated at the point in time and/or by accumulating an amount of change in the motion data over a predetermined period of time stored in the memory after obtaining the control button data (idnow, idend); and
   process performing means (30, S57, S83, S95) for performing, based on the magnitude calculated by the magnitude calculation means, a process determined according to a kind of the control button data obtained by the data obtaining means.

2. The information processing device according to claim 1, wherein:

   the motion sensor is an acceleration sensor (701) for detecting an acceleration according to movement of the housing;
   the motion data is acceleration data representing an acceleration detected by the acceleration sensor;
   the data obtaining means is adapted to obtain the acceleration data as the motion data; and
   the data storage means is adapted to store as necessary, the acceleration data in the memory as the motion data.

3. The information processing device according to claim 1, wherein:

the motion sensor is a gyro sensor for detecting an angular velocity according to rotation of the housing;

the motion data is angular velocity data representing the angular velocity detected by the gyro sensor;

the data obtaining means is adapted to obtain the angular velocity data as the motion data; and

the data storage means is adapted to store as necessary, the angular velocity data in the memory as the motion data.

4. The information processing device according to claim 1, wherein

the process performing means is adapted to perform a sound output process, as determined by a first kind of the control button data, to output a sound from a speaker (2a) with a sound volume and/or a sound quality according to the load calculated by the magnitude calculation means.

5. The information processing device according to claim 1,

wherein the process performing means is adapted to perform a first image display process, as determined by a second kind of the control button data, for displaying a first image on a screen of display means (2) to display the first image with a display size according to the load calculated by the magnitude calculation means.

6. The information processing device according to claim 1, further comprising

evaluation data setting means for setting evaluation data representing a point in time for operating the control button and a reference value for the point in time, wherein the process performing means is adapted to compare the evaluation data with the point in time at which the control button is operated as indicated by the control button data obtained by the data obtaining means and the load value calculated by the magnitude calculation means, thereby determining an evaluation value based an a result of the comparison.

7. The information processing device according to claim 1, further comprising

parameter setting means for setting a parameter so that an action of an object in a virtual game world is varied according to the load calculated by the magnitude calculating means, wherein the process performing means is adapted to perform a process, where the object is controlled in the virtual game world using the parameter set by the parameter setting means and displayed on a screen of display means, according to the control button data.

8. The information processing device according to claim 1, further comprising coordinate output means (74) for outputting data (Dal, Da2) specifying coordinates on a display screen of display means, wherein:

the data obtaining means further adapted to obtain data outputted from the coordinate output means; and

the process performing means includes:

attribute setting means (30, S95) for setting a parameter of an object in a virtual game world so that an attribute of the object is varied according to the load calculated by the magnitude calculation means, and storing the parameter in the memory;

pointed position calculation means (30, S91) for calculating, as a pointed position, a position on the display screen corresponding to the data outputted from the coordinate output means;

mark display control means (30, S92, S100) for calculating a target position in the virtual game world that overlaps a position on the display screen calculated by the pointed position calculation means, and displaying a mark (TG) representing the target position on the display screen; and

object display control means (30, S99, S100) for displaying, on the display screen, an object whose attribute has been set by the attribute setting means moving toward the target position according to the control button data.

9. A mobile telephone, comprising:

the information processing device according to claim 1; and

communications means for wireless communications with another telephone.

10. A video game device, comprising the information processing device according to claim 1, wherein:

the housing is a housing of a video game controller; and

the video game controller includes the control button, the button data generation means, and the motion sensor.

11. A storage medium storing an information processing program for instructing a computer (30) of an information processing device to perform a predetermined information processing operation based on at least one of control button data and motion data, the information processing device including a housing, a plurality of control buttons provided on a surface of the housing, button data generation means for, when one of the control buttons is operated, generating the control button data according to a kind of the control button, and a motion sensor for generating the motion data according to movement of housing,

wherein the information processing program instructs the computer to perform:

a data obtaining step of obtaining the control button data and the motion data;

a data storage step of storing, as necessary, the motion data obtained in the data obtaining step in a memory;

a magnitude calculation step (S54) for calculating a magnitude of housing movement representing a press-down load on the control button (pwr) at a point in time when the control button is operated, by accumulating an amount of change (w) in the motion data over a predetermined period of time already stored in the memory upon obtaining the control button data generated at the point in time and/or by accumulating an amount of change in the motion data over a predetermined period of time stored in the memory after obtaining the control button data; and

a process performing step of performing, based on the magnitude calculated by the magnitude calculation step, a process determined according to a kind of the control button data obtained in the data obtaining step.

12. The storage medium storing an information processing program according to claim 11, wherein:

the motion sensor is an acceleration sensor for detecting an acceleration according to movement of the housing;

the motion data is acceleration data representing an acceleration detected by the acceleration sensor;

the data obtaining step is a step of obtaining the acceleration data as the motion data; and the data storage step is a step of storing, as necessary, the acceleration data in the memory as the motion data.

13. The storage medium storing an information processing program according to claim 11, wherein:

the motion sensor is a gyro sensor for detecting an angular velocity according to rotation of the housing;

the motion data is angular velocity data representing the angular velocity detected by the gyro sensor;

the data obtaining step is a step of obtaining the angular velocity data as the motion data;

the data storage step is a step of storing, as necessary, the angular velocity data in the memory as the motion data.

14. The storage medium storing an information processing program according to claim 11, wherein the process performing step is a step of performing a sound output process, as determined by a first kind of the control button data, to output a sound from a speaker with a sound volume and/or a sound quality according to the load calculated in the magnitude calculation step.

15. The storage medium storing an information processing program according to claim 11, wherein the process performing step is a step of performing a first image display process, as determined by a second kind of the control button data, for displaying a first image an a screen of display means to display the first image with a display size according to the load calculated in the magnitude calculation step.

16. The storage medium storing an information processing program according to claim 11, further instructing the computer to perform an evaluation data setting step of setting evaluation data representing a point in time for operating the control button and a reference value for the point in time,

wherein the process performing step is a step of comparing the evaluation data with the point in time at which the control button is operated as indicated by the control button data obtained in the data obtaining step and the load value calculated in the magnitude calculation step, thereby determining an evaluation value based on a result of the comparison.

17. The storage medium storing an information processing program according to claim 11, further instructing the computer to perform a parameter setting step of setting a parameter so that an action of an object in a virtual game world is varied according to the load determined by the magnitude determining means, wherein the process performing step is a step of performing a process, where the object is controlled in the virtual game world using the parameter set in the parameter setting step and displayed on a screen of display means, according to the control button data.

18. The storage medium storing an information processing program according to claim 11, wherein:

in the data obtaining step, the process further obtains data outputted from coordinate output means for outputting data specifying coordinates on a display screen of display means; and the process performing step includes:

an attribute setting step of setting a parameter of an object in a virtual game world so that an attribute of the object is varied according to the load calculated in the magnitude calculation step, and storing the parameter in the memory;

a pointed position calculation step of calculating, as a pointed position, a position on the display screen corresponding to the data outputted from the coordinate output means;

a mark display control step of calculating a target position in the virtual game world that overlaps a position on the display screen calculated in the pointed position calculation step, and displaying a mark representing the target position on the display screen; and

object display control step of displaying, on the display screen, an object whose attribute has been set in the attribute setting step moving toward the target position according to the control button data.

## Patentansprüche

1. Informationsverarbeitungsvorrichtung (3), enthaltend ein Gehäuse (71), eine Mehrzahl von Steuertasten (72), die auf einer Oberfläche des Gehäuses vorgesehen sind, und Tastendatenerzeugungsmittel (751) zum, wenn eine der Steuertasten bedient wird, Erzeugen von Steuertastendaten (Da3) gemäß einer Art der Steuertaste, worin die Informationsverarbeitungsvorrichtung eine vorbestimmte Informationsverarbeitungsoperation durchführt unter Verwendung der Steuertastendaten, und die Informationsverarbeitungsvorrichtung enthält

einen Bewegungssensor (701) zur Erzeugung von Bewegungsdaten (Da4) gemäß der Bewegung des Gehäuses;

Datenbezugsmittel (Da) zum Beziehen der Steuertastendaten und der Bewegungsdaten;

Datenspeichermittel (33D) zum Speichern, wie erforderlich, der Bewegungsdaten, die vom Datenbezugsmittel erhalten wurden, in einem Speicher (33);

Betragsberechnungsmittel (30, S54) zum Berechnen eines Betrags der Gehäusebewegung, der eine nach unten gedrückte Last auf die Steuertaste (pwr) repräsentiert, zu einem Zeitpunkt, wenn die Steuertaste bedient wird, indem ein Betrag der Änderung in den Bewegungsdaten über eine vorbestimmte Zeitperiode akkumuliert wird, die schon im Speicher gespeichert sind, wenn die Steuertastendaten bezogen werden, die zu diesem Zeitpunkt erzeugt sind und/oder durch Akkumulieren eines Betrags der Änderung in den Bewegungsdaten über eine vorbestimmte Zeitperiode, die im Speicher gespeichert sind, nachdem die Steuertastendaten (idnow, idend) bezogen wurden; und

Prozessdurchführungsmittel (30, S57, S83, S95) zum Durchführen, auf der Basis des vom Betragsberechnungsmittel berechneten Betrags, eines Prozesses, der gemäß einer Art der Steuertastendaten bestimmt wird, die vom Datenbezugsmittel bezogen wurden.

2. Informationsverarbeitungsvorrichtung gemäß Anspruch 1, worin:

der Bewegungssensor ein Beschleunigungssensor (701) ist zum Erfassen einer Beschleunigung gemäß der Bewegung des Gehäuses;

die Bewegungsdaten Beschleunigungsdaten sind, die eine Beschleunigung repräsentieren, die vom Beschleunigungssensor festgestellt wurden;

das Datenbezugsmittel dazu eingerichtet ist, die Beschleunigungsdaten als die Bewegungsdaten zu beziehen;

das Datenspeichermittel dazu eingerichtet ist, wie erfordderlich, die Beschleunigungsdaten im Speicher als die Bewegungsdaten zu speichern.

3. Informationsverarbeitungsvorrichtung gemäß Anspruch 1, worin:

der Bewegungssensor ein Gyrosensor ist zum Feststellen einer Winkelgeschwindigkeit gemäß der Rotation des Gehäuses;

die Bewegungsdaten Winkelgeschwindigkeitsdaten sind, die die Winkelgeschwindigkeit repräsentieren, die vom Gyrosensor festgestellt wird;

das Datenbezugsmittel dazu eingerichtet ist, die Winkelgeschwindigkeitsdaten als Bewegungsdaten zu beziehen; und

das Datenspeichermittel dazu eingerichtet ist, wie erforderlich, die Winkelgeschwindigkeitsdaten im Speicher als Bewegungsdaten zu speichern.

4. Informationsverarbeitungsvorrichtung gemäß Anspruch 1, worin:

das Prozessdurchführungsmittel dazu eingerichtet ist, einen Tonausgabe-Prozess durchzuführen, wie durch eine erste Art von Steuertastendaten bestimmt, um einen Ton von einem Lautsprecher (2a) auszugeben, mit einem Tonvolumen und/oder einer Tonqualität gemäß der Last, die vom Betragsberechnungsmittel berechnet wurde.

5. Informationsverarbeitungsvorrichtung gemäß Anspruch 1, worin das Prozessdurchführungsmittel dazu eingerichtet ist, einen ersten Bildanzeigeprozess durchzuführen, wie durch eine zweite Art von Steuertastendaten bestimmt, um ein erstes Bild auf einem Schirm eines Anzeigemittels (2) anzuzeigen und das erste Bild mit einer Anzeigegröße anzuzeigen entsprechend der Last, die vom Betrag- Berechnungsmittel berechnet wurde.

**6.** Informationsverarbeitungsvorrichtung gemäß Anspruch 1, weiter enthaltend

Evaluationsdaten-Setzmittel zum Setzen von Evaluationsdaten, die einen Zeitpunkt repräsentieren zum Bedienen der Steuertaste und einen Referenzwert für den Zeitpunkt,

worin das Prozessdurchführungsmittel dazu eingerichtet ist, die Evaluationsdaten mit dem Zeitpunkt zu vergleichen, zu dem die Steuertaste bedient wird entsprechend der Angabe durch die Steuertastendaten, die vom Datenbezugsmittel erhalten wurden und des Lastwertes, der vom Betragsberechnungsmittel berechnet wurde, um so einen Evaluationswert festzustellen basierend auf einem Ergebnis des Vergleichs.

**7.** Informationsverarbeitungsvorrichtung gemäß Angst 1, weiter enthaltend

Parameter-Setzmittel zum Setzen eines Parameters, so dass eine Aktion eines Objekts in einer virtuellen Spielwelt variiert wird gemäß der Last, die vom Betragsberechnungsmittel berechnet wurde, worin das Prozessdurchführungsmittel dazu eingerichtet ist, einen Prozess durchzuführen, worin das Objekt in der virtuellen Spielwelt gesteuert wird unter Verwendung des Parameters, der vom Parameter-Setzmittel gesetzt wurde und auf einem Schirm eines Anzeigemittels angezeigt wird, entsprechend den Steuertastendaten.

**8.** Informationsverarbeitungsvorrichtung gemäß Anspruch 1, weiter enthaltend Koordinaten-Ausgabemittel (74) zum Ausgeben von Daten (Da1, Da2), die Koordinaten auf einem Anzeigeschirm eines Anzeigemittels spezifizieren, worin

das Datenbezugsmittel weiter dazu eingerichtet ist, Daten zu beziehen, die vom Koordinaten-Ausgabemittel ausgegeben werden; und

das Prozessdurchführungsmittel enthält:

Attribut-Setzmittel (30, S95) zum Setzen eines Parameters eines Objekts in einer virtuellen Spielwelt, so dass ein Attribut des Objekts variiert wird gemäß der Last, die vom Betragsberechnungsmittel berechnet wurde, und Speichern des Parameters im Speicher; angezeigte Positions-Berechnungsmittel (30, S91) zum Berechnen, als eine angezeigte Position, einer Position auf dem Anzeigeschirm, die den Daten entspricht, die vom Koordinaten-Ausgabemittel ausgegeben wurden;

Markierungsanzeige-Steuermittel (30, S92, S100) zum Berechnen einer Zielposition in der virtuellen Spielwelt, die eine Position auf dem Anzeigeschirm überlappt, die vom angezeigte Positions-Berechnungsmittel berechnet wurde, und Anzeigen einer Markierung (TG), die die Zielposition auf dem Anzeigeschirm repräsentiert; und

Objektanzeige-Steuermittel (30, S99, S100) zum Anzeigen, auf dem Anzeigeschirm, eines Objekts, dessen Attribut durch das Attribut-Setzmittel gesetzt wurde und das sich auf die Zielposition bewegt gemäß den Steuertastendaten.

**9.** Mobiltelefon enthaltend:

die Informationsverarbeitungsvorrichtung gemäß Anspruch 1; und

Kommunikationsmittel zur drahtlosen Kommunikation mit einem anderen Telefon.

**10.** Videospielvorrichtung, enthaltend die Informationsverarbeitungsvorrichtung gemäß Anspruch 1, worin:

das Gehäuse ein Gehäuse eines Videospielcontrollers ist; und

der Videospielcontroller enthält die Steuertaste, die Steuertasten-Datenerzeugungsmittel und den Bewegungssensor.

**11.** Speichermedium, das ein Informationsverarbeitungsprogramm speichert, um einen Computer (30) einer Informationsverarbeitungsvorrichtung zu instruieren, eine vorbestimmten Informationsverarbeitungsoperation durchzuführen, die basiert ist auf mindestens einer von Steuertastendaten und Bewegungsdaten, wobei die Informationsverarbeitungsvorrichtung enthält ein Gehäuse, eine Mehrzahl von Steuertasten, die auf einer Oberfläche des Gehäuses vorgesehen sind, Tastendatenerzeugungsmittel zum, wenn eine der Steuertasten bedient wird, Erzeugen der Steuertastendaten gemäß einer Art der Steuertaste, und einen Bewegungssensor zum Erzeugen der Bewegungsdaten gemäß der Bewegung des Gehäuses,

worin das Informationsverarbeitungsprogramm den Computer instruiert durchzuführen:

einen Datenbezugsschritt zum Beziehen der Steuertastendaten und der Bewegungsdaten; einen Datenspeicherschritt zum Speichern, wie erforderlich, der Bewegungsdaten, die im Datenbezugsschritt erhalten wurden, in einem Speicher;

einen Betragsberechnungsschritt (S54) zum Berechnen eines Betrags der Gehäusebewegung, der eine nach unten gedrückte Last auf die Steuertaste (pwr) repräsentiert, zu einem Zeitpunkt, wenn die Steuertaste bedient wird, indem ein Betrag der Änderung in den Bewegungsdaten über eine vorbestimmte Zeitperiode akkumuliert wird, die schon im Speicher gespeichert sind, wenn die Steuertastendaten bezogen werden, die zu dem Zeitpunkt erzeugt sind und/oder durch Akkumulieren eines Betrags der Änderung in den Bewegungsdaten über eine vorbestimmte Zeitperiode, die im Speicher gespeichert sind, nachdem die Steuertastendaten bezogen wurden; und einen Prozessdurchführungsschritt zum Durchführen, auf der Basis des im Betragsberechnungsschritt berechneten Betrags, eines Prozesses, der gemäß einer Art der Steuertastendaten bestimmt wird, die im Datenbezugsschritt bezogen wurden.

12. Speichermedium, das ein Informationsverarbeitungsprogramm gemäß Anspruch 11 speichert, worin:

    der Bewegungssensor ein Beschleunigungssensor ist zum Erfassen einer Beschleunigung gemäß der Bewegung des Gehäuses; die Bewegungsdaten Beschleunigungsdaten sind, die eine Beschleunigung repräsentieren, die vom Beschleunigungssensor festgestellt wurden; der Datenbezugsschritt ein Schritt ist zum Beziehen der Beschleunigungsdaten als die Bewegungsdaten; und der Datenspeicherschritt ein Schritt ist zum Speichern, wie erforderlich, der Beschleunigungsdaten im Speicher als die Bewegungsdaten.

13. Speichermedium, das ein Informationsverarbeitungsprogramm gemäß Anspruch 11 speichert, worin:

    der Bewegungssensor ein Gyrosensor ist zum Feststellen einer Winkelgeschwindigkeit gemäß der Rotation des Gehäuses; die Bewegungsdaten Winkelgeschwindigkeitsdaten sind, die die Winkelgeschwindigkeit repräsentieren, die vom Gyrosensor festgestellt werden; der Datenbezugsschritt ein Schritt ist zum Beziehen der Winkelgeschwindigkeitsdaten als Bewegungsdaten; und der Datenspeicherschritt ein Schritt ist zum Speichern, wie erforderlich, der Winkelgeschwindigkeitsdaten im Speicher als die Bewegungsdaten.

14. Speichermedium, das ein Informationsverarbeitungsprogramm gemäß Anspruch 11 speichert, worin der Prozessdurchführungsschritt ein Schritt ist zum Durchführen eines Tonausgabe-Prozesses, wie durch eine erste Art von Steuertastendaten bestimmt, um einen Ton von einem Lautsprecher auszugeben, mit einem Tonvolumen und/oder einer Tonqualität gemäß der Last, die im Betragsberechnungsschritt berechnet wurde.

15. Speichermedium, das ein Informationsverarbeitungsprogramm gemäß Anspruch 11 speichert, worin der Prozessdurchführungsschritt ein Schritt ist zum Durchführen eines ersten Bildanzeigeprozesses, wie durch eine zweite Art von Steuertastendaten bestimmt, um ein erstes Bild auf einem Schirm eines Anzeigemittels anzuzeigen und das erste Bild mit einer Anzeigegröße anzuzeigen entsprechend der Last, die im Betragsberechnungsschritt berechnet wurde.

16. Speichermedium, das ein Informationsverarbeitungsprogramm gemäß Anspruch 11 speichert, weiter den Computer instruierend, einen Evaluationsdaten-Setzschritt durchzuführen zum Setzen von Evaluationsdaten, die einen Zeitpunkt repräsentieren zum Bedienen der Steuertaste und einen Referenzwert für den Zeitpunkt, worin der Prozessdurchführungsschritt ein Schritt ist zum Vergleichen der Evaluationsdaten mit dem Zeitpunkt, zu dem die Steuertaste bedient wird entsprechend der Angabe durch die Steuertastendaten, die im Datenbezugsschritt erhalten wurden und des Lastwertes, der im Betragsberechnungsschritt berechnet wurde, um so einen Evaluationswert festzustellen basierend auf einem Ergebnis des Vergleichs.

17. Speichermedium, das ein Informationsverarbeitungsprogramm gemäß Anspruch 11 speichert, weiter den Computer instruierend einen Parameter-Setzschritt durchzuführen zum Setzen eines Parameters, so dass eine Aktion eines Objekts in einer virtuellen Spielwelt variiert wird gemäß der Last, die im Betragsberechnungsschritt berechnet wurde, worin der Prozessdurchführungsschritt ein Schritt ist zum Durchführen eines Prozesses, wobei das Objekt in der virtuellen Spielwelt gesteuert wird unter Verwendung des Parameters, der im Parameter-Setzschritt gesetzt wurde und auf einem Schirm eines Anzeigemittels angezeigt wird, entsprechend den Steuertastendaten.

18. Speichermedium, das ein Informationsverarbeitungsprogramm gemäß Anspruch 11 speichert, worin:

    im Datenbezugsschritt das Verfahren weiter Daten bezieht, die von einem Koordinaten-Ausgabemittel ausgegeben werden, das Daten ausgibt, die Koordinaten auf einem Anzeigeschirm eines Anzeigemittels spezifizieren, und der Prozessdurchführungsschritt enthält:

einen Attribut-Setzschritt zum Setzen eines Parameters eines Objekts in einer virtuellen Spielwelt, so dass ein Attribut des Objekts variiert wird gemäß der Last, die im Betragsberechnungsschritt berechnet wurde, und Speichern des Parameters im Speicher; einen angezeigte Positions-Berechnungsschritt zum Berechnen, als eine angezeigte Position, einer Position auf dem Anzeigeschirm, die den Daten entspricht, die vom Koordinaten-Ausgabemittel ausgegeben wurden; einen Markierungsanzeige-Steuerschritt zum Berechnen einer Zielposition in der virtuellen Spielwelt, die eine Position auf dem Anzeigeschirm überlappt, die im angezeigte Positions-Berechnungsschritt berechnet wurde, und Anzeigen einer Markierung (TG), die die Zielposition auf dem Anzeigeschirm repräsentiert; und einen Objektanzeige-Steuerschritt zum Anzeigen, auf dem Anzeigeschirm, eines Objekts, dessen Attribut im Attribut-Setzschritt gesetzt wurde und das sich auf die Zielposition bewegt gemäß den Steuertastendaten.

**Revendications**

1. Un dispositif de traitement de l'information (3), comprenant un boitier (71), une pluralité de boutons de contrôle (72) disposés sur une surface du boitier, et un moyen de génération de données de bouton (751) pour, lorsque l'un des boutons de contrôle est actionné, générer des données de bouton de contrôle (Da3) en fonction d'un type du bouton de contrôle, où le dispositif de traitement de l'information exécute une opération de traitement de l'information prédéterminée par utilisation des données de bouton de contrôle, le dispositif de traitement de l'information comprenant :

un capteur de mouvement (701) pour générer des données de mouvement (Da4) en fonction du mouvement du boitier ; un moyen d'obtention de données (Da) pour l'obtention des données de bouton de contrôle et des données de mouvement ; un moyen de stockage de données (33D) pour stocker dans une mémoire (33), en tant que de besoin, les données de mouvement obtenues par le moyen d'obtention de données ; un moyen de calcul d'une grandeur (30, S54) pour le calcul d'une grandeur d'un mouvement de boitier représentant une charge en pression d'appui sur le bouton de contrôle (pwr) à un instant où le bouton de contrôle est actionné, par cumul d'une quantité de modification des données de mouvement sur un laps de temps prédéterminé qui sont déjà stockées dans la mémoire sur obtention des données de bouton de contrôle générées à l'instant et/ou par cumul d'une quantité de modification des données de mouvement sur un laps de temps prédéterminé qui sont stockées dans la mémoire après obtention des données de bouton de contrôle (idnow, idend) ; et un moyen de traitement de processus (30, S57, S83, S95) pour l'exécution, sur la base de la grandeur calculée par le moyen de calcul de grandeur, d'un processus déterminé en fonction d'un type de données de bouton de contrôle obtenues par le moyen de tension de données.

2. Le dispositif de traitement de l'information selon la revendication 1, dans lequel :

le capteur de mouvement est un capteur d'accélération (701) pour détecter une accélération en fonction du mouvement du boitier ; les données de mouvement sont des données d'accélération représentant une accélération détectée par le capteur d'accélération ; le moyen d'obtention des données est apte à obtenir les données d'accélération en tant que données de mouvement ; et le moyen de stockage de données est apte à stocker dans la mémoire, en tant que de besoin, les données d'accélération en tant que données de mouvement.

3. Le dispositif de traitement de l'information selon la revendication 1, dans lequel :

le capteur de mouvement est un capteur gyrométrique pour la détection d'une vitesse angulaire en fonction de la rotation de boitier ; les données de mouvement sont des données de vitesse angulaire représentant la vitesse angulaire détectée par le capteur gyrométrique ; le moyen d'obtention de données est apte à obtenir les données de vitesse angulaire en tant que données de mouvement ; et le moyen de stockage de données est apte à stocker dans la mémoire, en tant que de besoin, les données de vitesse angulaire en tant que données de mouvement.

4. Le dispositif de traitement de l'information selon la revendication 1, dans lequel :

le moyen de traitement de processus est apte à exécuter un processus de délivrance d'un son, tel que déterminé par un premier type des données de bouton de contrôle, pour délivrer un son à partir d'un haut-parleur (2a) avec un volume sonore et/ou une qualité sonore fonction de la charge calculée par le moyen de calcul d'une grandeur.

5. Le dispositif de traitement de l'information selon la revendication 1, dans lequel le moyen d'exécution du processus est apte à exécuter un premier processus d'affichage d'image, tel que déterminé par un second type des données de bouton de contrôle, pour l'affichage d'une première image sur un écran d'un moyen d'affichage (2) pour afficher la première image avec une dimension d'affichage fonction de la charge calculée par le moyen de calcul d'une grandeur.

6. Le dispositif de traitement de l'information selon la revendication 1, comprenant en outre :

un moyen d'ajustement de données d'évaluation pour ajuster des données d'évaluation représentant un instant pour l'actionnement du bouton de contrôle et une valeur de référence pour l'instant, le moyen d'exécution de processus étant apte à comparer les données d'évaluation avec l'instant auquel le bouton de contrôle est actionné tel qu'indiqué par les données de bouton de contrôle obtenues par le moyen d'obtention de données et la valeur de charge calculée par le moyen de calcul d'une grandeur, de manière à déterminer ainsi une valeur d'évaluation basée sur un résultat de la comparaison.

7. Le dispositif de traitement de l'information selon la revendication 1, comprenant en outre :

un moyen d'ajustement de paramètre pour l'ajustement d'un paramètre de telle sorte qu'une action d'un objet dans un monde de jeu virtuel soit modifiée en fonction de la charge calculée par le moyen de calcul d'une grandeur, le moyen de traitement de processus étant apte à exécuter un processus où l'objet est contrôlé dans le monde de jeu virtuel en utilisant le paramètre ajusté par le moyen d'ajustement de paramètre et affiché sur un écran d'un moyen d'affichage, en fonction des données de bouton de contrôle.

8. Le dispositif de traitement de l'information selon la revendication 1, comprenant en outre un moyen de délivrance de coordonnées (74) pour délivrer des données (Da1, Da2) spécifiant des coordonnées sur un écran d'affichage d'un moyen d'affichage, dans lequel :

le moyen d'obtention de données est en outre apte à obtenir des données délivrées par le moyen de délivrance de coordonnées ; et le moyen d'exécution de processus inclut :

un moyen d'ajustement d'attribut (30, S95) pour l'ajustement d'un paramètre d'un objet dans un monde de jeu virtuel de telle sorte qu'un attribut de l'objet soit modifié en fonction de la charge calculée par le moyen de calcul d'une grandeur, et pour stocker le paramètre dans la mémoire ; un moyen de calcul de position pointée (30, S91) pour calculer, en tant que position pointée, une position sur l'écran d'affichage correspondant aux données délivrées par le moyen de délivrance de coordonnées ; un moyen de contrôle d'affichage de marqueur (30, S92, S100) pour calculer une position cible dans le monde de jeu virtuel qui chevauche une position sur l'écran d'affichage calculée par le moyen de calcul de position pointée, et afficher un marqueur (TG) représentant la position cible sur l'écran d'affichage ; et un moyen de contrôle d'affichage d'objet (30, S99, S100) pour l'affichage, sur l'écran d'affichage, d'un objet dont l'attribut a été ajusté par le moyen d'ajustement d'attribut en déplacement vers la position cible en fonction des données de bouton de contrôle.

9. Un téléphone mobile comprenant :

le dispositif de traitement de l'information selon la revendication 1 ; et un moyen de communication pour communication sans fil avec un autre téléphone.

10. Un dispositif de jeu vidéo, comprenant le dispositif de traitement de l'information selon la revendication 1, dans lequel :

le boitier est un boitier d'un contrôleur de jeu vidéo ; et le contrôleur de jeu vidéo comprend le bouton de contrôle, le moyen de génération de données de bouton et le capteur de mouvement.

11. Un support de stockage stockant un programme de traitement de l'information pour amener un calculateur (30) d'un dispositif de traitement de l'information à exécuter une opération de traitement de l'information prédéterminée sur la base d'au moins l'une d'entre des données de bouton de contrôle et des données de mouvement, le dispositif de traitement de l'information comprenant un boitier, une pluralité de boutons de contrôle disposés sur une surface du boitier, un moyen de génération de données de bouton pour, lorsque l'un des boutons de contrôle est actionné, générer les données de bouton de contrôle en fonction d'un type du bouton de contrôle, et un capteur de mouvement pour générer les données de mouvement en fonction du mouvement du boitier, dans lequel le programme de traitement de l'information amène le calculateur à exécuter :

une étape d'obtention des données pour l'obtention des données de bouton de contrôle et des données de mouvement ;

une étape de stockage pour le stockage dans une mémoire de données, en tant que de besoin, des données de mouvement obtenues à l'étape d'obtention des données ;

une étape de calcul d'une grandeur (S54) pour le calcul d'une grandeur du mouvement du boitier représentant une charge en pression d'appui sur le bouton de contrôle (pwr) à un instant où le bouton de contrôle est actionné, par cumul d'une quantité de modification (w) des données de mouvement sur un laps de temps prédéterminé qui sont déjà stockées dans la mémoire sur obtention des données de bouton de contrôle générées à l'instant et/ou par cumul d'une quantité de modification des données de mouvement sur un laps de temps prédéterminé qui sont stockées dans la mémoire après obtention des données de bouton de contrôle ; et

une étape d'exécution d'un processus pour l'exécution, sur la base de la grandeur calculée à l'étape de calcul d'une grandeur, d'un processus déterminé en fonction d'un type des données de bouton de contrôle obtenues à l'étape d'obtention des données.

12. Le support de stockage stockant un programme de traitement de l'information selon la revendication 11, dans lequel :

le capteur de mouvement est un capteur d'accélération pour détecter une accélération en fonction du mouvement du boitier ;

les données de mouvement sont des données d'accélération représentant une accélération détectée par le capteur d'accélération ;

l'étape d'obtention des données est une étape pour obtenir les données d'accélération en tant que données de mouvement ; et l'étape de stockage de données est une étape pour stocker dans la mémoire, en tant que de besoin, les données d'accélération en tant que données de mouvement.

13. Le support de stockage stockant un programme de traitement de l'information selon la revendication 11, dans lequel :

le capteur de mouvement est un capteur gyrométrique pour la détection d'une vitesse angulaire en fonction de la rotation de boitier ;

les données de mouvement sont des données de vitesse angulaire représentant la vitesse angulaire détectée par le capteur gyrométrique ;

l'étape d'obtention de données est une étape pour obtenir les données de vitesse angulaire en tant que données de mouvement ; et

l'étape de stockage de données est une étape pour stocker dans la mémoire, en tant que de besoin, les données de vitesse angulaire en tant que données de mouvement.

14. Le support de stockage stockant un programme de traitement de l'information selon la revendication 11, dans lequel l'étape de traitement de processus est une étape pour exécuter un processus de délivrance d'un son, tel que déterminé par un premier type des données de bouton de contrôle, pour délivrer un son à partir d'un haut-parleur avec un volume sonore et/ou une qualité sonore fonction de la charge calculée à l'étape de calcul d'une grandeur.

15. Le support de stockage stockant un programme de traitement de l'information selon la revendication 11, dans lequel l'étape d'exécution du processus est une étape pour exécuter un premier processus d'affichage d'image, tel que déterminé par un second type des données de bouton de contrôle, pour l'affichage d'une première image sur un écran d'un moyen d'affichage pour afficher la première image avec une dimension d'affichage fonction de la charge calculée à l'étape de calcul d'une grandeur.

16. Le support de stockage stockant un programme de traitement de l'information selon la revendication 11, amenant en outre le calculateur à exécuter une étape d'ajustement de données d'évaluation représentant un instant pour l'actionnement du bouton de contrôle et une valeur de référence pour l'instant, dans lequel l'étape d'exécution d'un processus est une étape de comparaison des données d'évaluation avec l'instant auquel le bouton de contrôle est actionné tel qu'indiqué par les données de bouton de contrôle obtenues à l'étape d'obtention des données et la valeur de charge calculée à l'étape de calcul d'une grandeur, de manière à déterminer ainsi une valeur d'évaluation sur la base d'un résultat de la comparaison.

17. Le support de stockage stockant un programme de traitement de l'information selon la revendication 11, amenant en outre le calculateur à exécuter une étape d'ajustement d'un paramètre pour l'ajustement d'un paramètre de telle manière qu'une action d'un objet dans un monde de jeu virtuel soit modifiée en fonction de la charge déterminée par le moyen de détermination d'une grandeur,

dans lequel l'étape d'exécution d'un processus est une étape pour l'exécution d'un processus où l'objet est contrôlé dans le monde de jeu virtuel en utilisant le paramètre ajusté à l'étape d'ajustement de paramètre et affiché sur un écran d'un moyen d'affichage, en fonction des données de bouton de contrôle.

18. Le support de stockage stockant un programme de traitement de l'information selon la revendication 11, dans lequel :

à l'étape d'obtention des données, le processus obtient en outre des données délivrées à partir d'un moyen de délivrance de coordonnées pour la délivrance de données spécifiant des coordonnées sur un écran d'affichage d'un moyen d'affichage ; et

l'étape d'exécution d'un processus comprend :

une étape d'ajustement d'un attribut pour l'ajustement d'un paramètre d'un objet dans un monde de jeu virtuel de telle sorte qu'un attribut de l'objet soit modifié en fonction de la charge calculée à l'étape de calcul d'une grandeur, et pour le stockage du paramètre dans la mémoire ;

une étape de calcul d'une position pointée pour le calcul, en tant que position pointée, d'une position sur l'écran d'affichage correspondant aux données délivrées en provenance du moyen de délivrance de coordonnées ;

une étape de contrôle d'un affichage de marqueur pour le calcul d'une position cible dans le monde de jeu virtuel qui chevauche une position sur l'écran d'affichage calculée à l'étape de calcul d'une position pointée, et pour l'affichage d'un marqueur représentant la position cible sur l'écran d'affichage ; et

une étape de contrôle d'affichage d'objet pour l'affichage, sur l'écran d'affichage, d'un objet dont l'attribut a été ajusté à l'étape d'ajustement d'attribut en déplacement vers la position cible en fonction des données de bouton de contrôle.

F I G. 1

# FIG. 2

F I G. 3

F I G. 4

7

71

72i

74

x

z

y

F I G. 5

F I G. 6

FIG. 7

7

7

CONTROLLER

CONTROL SECTION 72

ACCELERATION SENSOR 701

74 744

741 | IMAGE SENSING DEVICE → IMAGE PROCESSING CIRCUIT

742 743

IMAGE CAPTURING/ PROCESSING SECTION

SPEAKER ← AMPLIFIER ← SOUND IC

708 707

706 704 VIBRATOR

CONNECTOR

73

MICRO-COMPUTER 751

WIRELESS MODULE

754

753

752 MEMORY

COMMUNICATIONS SECTION

75

F I G. 8 A

F I G. 8 B

PRESS-DOWN LOAD

72a  72d

7

72i

F I G. 9

PRESS-DOWN LOAD

θ

7

y

z ← ⊙ x

ACCELERATION

# F I G. 1 0

F I G.  1 1

F I G. 1 2

OBJ

# F I G. 1 3

| PROGRAM STORAGE AREA | |
|---|---|
| VIDEO GAME PROGRAM | GP |

33P

⋮

DATA STORAGE AREA

| CONTROL INFORMATION | Da |
|---|---|
| FIRST POSITION DATA | Da1 |
| SECOND POSITION DATA | Da2 |
| KEY DATA | Da3 |
| ACCELERATION DATA | Da4 |

33D

⋮

| PREVIOUS ACCELERATION DATA | Db |
|---|---|
| STORAGE POSITION DATA | Dc |
| DIFFERENCE DATA BUFFER | Dd |

| bf_id | DIFFERENCE VALUE |
|---|---|
| 0 | w0 |
| 1 | w1 |
| ⋮ | ⋮ |

| PRESS-DOWN LOAD DATA | De |
|---|---|
| MEASUREMENT FLAG | Df |
| SAMPLING RANGE DATA | Dg |
| SOUND VOLUME DATA | Dh |

⋮

FIG. 14

```
                    ┌──────────────────────────┐
                    │          START           │
                    └──────────────────────────┘
                                 │
                                 ▼
S51 ─┐    ┌──────────────────────────────────┐
     │    │   ACCELERATION INFORMATION        │
     │    │   INITIALIZATION PROCESS          │
          └──────────────────────────────────┘
                                 │
                                 ▼
S52 ─┐    ┌──────────────────────────────────┐
     │    │      BUTTON INFORMATION           │
     │    │   INITIALIZATION PROCESS          │
          └──────────────────────────────────┘
                                 │
                                 ▼
S53 ─┐    ┌──────────────────────────────────┐
     │    │   GAME INITIALIZATION PROCESS     │
          └──────────────────────────────────┘
                                 │
                                 ●
              ┌──────────────────┴──────────────────┐
              ▼                                      ▼
S54 ─┐ ┌───────────────────┐          S56 ─┐ ┌───────────────────┐
     │ │   ACCELERATION     │              │ │  BUTTON INFORMATION │
     │ │ INFORMATION STORING│              │ │   READING PROCESS   │
       │      PROCESS        │                └───────────────────┘
       └───────────────────┘                         │
              │                                       ▼
              │                        S57 ─┐ ┌───────────────────┐
              │                             │ │  GAME MAIN PROCESS │
              │                               └───────────────────┘
              ▼                                       ▼
S55 ─┐   ◇──────────────◇          S58 ─┐    ◇──────────────◇
   No │  │  GAME OVER ?  │              │    │  GAME OVER ?  │  No
      └──◇──────────────◇              └────◇──────────────◇──┘
              │ Yes                             │ Yes
              └──────────────────┬─────────────┘
                                 ●
                                 ▼
                    ┌──────────────────────────┐
                    │           END            │
                    └──────────────────────────┘
```

F I G.  1 5

```
┌─────────────────────────────┐
│   START OF ACCELERATION      │
│  INFORMATION STORING PROCESS │
└─────────────────────────────┘
              │
S61 ┌─────────────────────────────┐
    │    READ ACCELERATION DATA    │
    └─────────────────────────────┘
              │
S62 ┌─────────────────────────────┐
    │   CALCULATE DIFFERENCE FROM  │
    │        PREVIOUS DATA         │
    └─────────────────────────────┘
              │
S63 ┌─────────────────────────────┐
    │  STORE CURRENT ACCELERATION  │
    │            DATA              │
    └─────────────────────────────┘
              │
S64 ┌─────────────────────────────┐
    │   CALCULATE MAGNITUDE OF     │
    │        DIFFERENCE            │
    └─────────────────────────────┘
              │
S65 ┌─────────────────────────────┐
    │     STORE MAGNITUDE OF       │
    │        DIFFERENCE            │
    └─────────────────────────────┘
              │
S66 ┌─────────────────────────────┐
    │    UPDATE STORAGE POSITION   │
    │           bf_id              │
    └─────────────────────────────┘
              │
┌─────────────────────────────┐
│    END OF ACCELERATION       │
│  INFORMATION STORING PROCES  │
└─────────────────────────────┘
```

F I G.  1 6

```
        ┌─────────────────────────────────┐
        │  START OF BUTTON INFORMATION     │
        │      READING PROCESS             │
        └─────────────────────────────────┘
                        │
                        ▼
      S71          ╱────────────╲          No
        ─────────<   BUTTON       >─────────────────────────┐
                  ╲ OFF→ON ?      ╱                          │
                   ╲────────────╱                            │
                        │ Yes                                ▼
      S72               ▼                    S74      ╱──────────────╲     No
    ┌───────────────────────────────┐          ─────< PRESS-DOWN      >──────┐
    │ PROCESS FOR STARTING PRESS-DOWN│              ╲ LOAD BEING MEASURED╱     │
    │  LOAD MEASURING OPERATION      │               ╲     ?         ╱        │
    └───────────────────────────────┘                ╲────────────╱          │
      S73               │                                   │ Yes            │
                        ▼                                   │                │
    ┌───────────────────────────────┐                      │                │
    │  DETERMINE SAMPLING RANGE      │                      │                │
    │      (id_now, id_end)          │                      │                │
    └───────────────────────────────┘                      │                │
                        │◄─────────────────────────────────┘                │
      S75               ▼                                                    │
              ╱────────────────╲          Yes                                │
        ┌───<   id_now=bf_id?     >───────────────────────────────────────┐ │
        │     ╲────────────────╱                                          │ │
        │              │ No                                               │ │
      S76              ▼                                                  │ │
        │  ┌───────────────────────────────┐                            │ │
        │  │   ACCUMULATE DIFFERENCE        │                            │ │
        │  │  STORED IN id_now TO UPDATE    │                            │ │
        │  │    PRESS-DOWN LOAD             │                            │ │
        │  └───────────────────────────────┘                            │ │
      S77              │                                                  │ │
        │              ▼                                                  │ │
        │  ┌───────────────────────────────┐                            │ │
        │  │       UPDATE id_now            │                            │ │
        │  └───────────────────────────────┘                            │ │
        │              │                                                  │ │
      S78 No           ▼                                                  │ │
        │      ╱────────────────╲                                        │ │
        └────<   id_now=id_end ?  >                                      │ │
               ╲────────────────╱                                        │ │
                       │ Yes                                             │ │
      S79              ▼                                                  │ │
    ┌───────────────────────────────┐                                   │ │
    │ PROCESS FOR ENDING PRESS-DOWN  │                                   │ │
    │  LOAD MEASURING OPERATION      │                                   │ │
    └───────────────────────────────┘                                   │ │
                       │◄──────────────────────────────────────────────┘ │
                       │◄──────────────────────────────────────────────────┘
                       ▼
        ┌─────────────────────────────────┐
        │  END OF BUTTON INFORMATION        │
        │      READING PROCESS              │
        └─────────────────────────────────┘
```

F I G. 1 7

```
        ┌──────────────────────────┐
        │   START OF GAME MAIN      │
        │       PROCESS            │
        └──────────────────────────┘
                    │
                    ▼
S81            ╱─────────╲                No
          ────<   BUTTON   >──────────────────────┐
              ╲ OFF→ON ?  ╱                        │
                ╲───────╱                          │
                    │ Yes                          ▼
S82                 ▼                    S84   ╱──────────────╲    No
        ┌──────────────────────┐          ───<  PRESS-DOWN    >───────┐
        │   START REPRODUCING  │             ╲ LOAD BEING MEASURED╱    │
        │     SOUND EFFECT     │              ╲       ?        ╱       │
        └──────────────────────┘                ╲──────────╱          │
                    │                                │ Yes             │
                    │                    S85    ╱──────────╲           │
                    │              Yes    ╱ SOUND EFFECT  ╲            │
                    │◄───────────────────< BEING REPRODUCED >          │
                    │                     ╲      ?        ╱            │
S83                 ▼                       ╲──────────╱               │
        ┌──────────────────────────┐            │ No                  │
        │ SET VOLUME OF SOUND EFFECT│            │                     │
        │ ACCORDING TO PRESS-DOWN LOAD│          │                     │
        └──────────────────────────┘            │                     │
                    │◄───────────────────────────┼─────────────────────┘
                    ▼
S86            ╱─────────╲
     No       ╱  TIME TO  ╲
    ┌────────< END REPRODUCTION>
    │         ╲     ?     ╱
    │           ╲───────╱
    │               │ Yes
    │  S87          ▼
    │   ┌──────────────────────┐
    │   │  END REPRODUCTION OF │
    │   │     SOUND EFFECT     │
    │   └──────────────────────┘
    │               │
    └───────────────┤
                    ▼
        ┌──────────────────────┐
        │   END OF GAME MAIN   │
        │       PROCESS        │
        └──────────────────────┘
```

FIG. 18

FIG. 19

```
        ( START OF GAME MAIN )
        (      PROCESS       )
                 |
S91 ---   [ CALCULATE TARGET ]
          [    POSITION      ]
                 |
S92 ---   [ SET GUNSIGHT OBJECT AT ]
          [    TARGET POSITION     ]
                 |
S93 ---   < BUTTON OFF→ON ? > --No--> ...
                 | Yes                       S96 --- < PRESS-DOWN LOAD BEING MEASURED ? > --No-->
S94 --- [ PROCESS FOR STARTING OBJECT ]              | Yes
        [ SPEED SETTING OPERATION     ]      S97 --- < SPEED BEING SET ? > --Yes-->
                 |                                    | No
S95 --- [ SET OBJECT SPEED ACCORDING ]
        [ TO PRESS-DOWN LOAD         ]
                 |
S98 --- < TIME TO DETERMINE SPEED ? > --No-->
                 | Yes
S99 --- [ START MOVING OBJECT ]
        [ AT DETERMINED SPEED ]
        [ TOWARD TARGET POSITION ]
                 |
S100 --- [ DISPLAY PROCESS ]
                 |
        ( END OF GAME MAIN )
        (     PROCESS      )
```

51

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0064548 A
- US 2005253806 A
- WO 2005043332 A2
- US 6314426 B1